# EUROPEAN PATENT APPLICATION

(11) **EP 1 734 532 A1**
(43) Date of publication of application: **20.12.2006**
(21) Application number: 05728399.6
(22) Date of filing: 05.04.2005
(51) Int. Cl.: G11B 23/03

(54) **DISK CARTRIDGE**

(30) Priority: 05.04.2004 JP 2004111444; 04.04.2005 JP 2005107286
(71) Applicant: SONY CORPORATION, Tokyo 141-0001 (JP)
(72) Inventor: FUNAWATARI, Takatsugu, Shinagawa-ku, Tokyo (JP); SHIBAGAKI, Susumu, Shinagawa-ku, Tokyo (JP)
(74) Representative: Müller, Frithjof E.
(86) International application number: PCT/JP2005/006991
(87) International publication number: WO 2005/098858

(57) **Abstract**

A disc cartridge includes a cartridge main body 2 composed of a lower shell 7 and an upper shell 6, a rotation wheel 4 rotatably accommodated in the cartridge main body as well as accommodating a disc 3 therein, and a pair of shutter plates 5a and 5b located between the lower shell 7 and the rotation wheel 4 and opening the first opening 24 and the second opening 44 in association with the rotation of the rotation wheel 4. The second shutter plate 5b is rotatably attached to the first shutter plate 5a by inserting a support shaft 62a into a shaft hole 54 disposed to the first shutter plate 5a. Since locking portions 62e and 62f which have a diameter larger than the shaft hole 54 are disposed to the extreme end portion of the support shaft 62a in a state that the second shutter plate 5b is attached to the first shutter plate 5a, the support shaft 62a is prevented from being removed from the shaft hole 54. With this arrangement, even if an external shock is applied to the cartridge, it is possible to make the second shutter plate unlike to be removed from the support shaft of the first shutter plate.

## Description

### Technical Field

The present invention relates to a disc cartridge for preventing removal of a pair of shutter plates for opening and closing an opening for locating a part of a disc outside.

### Background Art

Disc cartridges include a disc cartridge as disclosed in Japanese Unexamined Patent Application Publication No. 2003-109343. The disc cartridge disclosed in Japanese Unexamined Patent Application Publication No. 2003-109343 has an inner rotor and a pair of shutter plates in a cartridge main body, and an optical disc is accommodated in the inner rotor. The inner rotor rotates in the cartridge main body, and when an opening for locating the optical disc outside agrees with an opening of the cartridge main body, the pair of shutter plates open these openings to locate the accommodated optical disc outside. An information signal is recorded very densely on optical discs used in this type of the disc cartridge, and thus when foreign materials such as dusts and the like are deposited on a signal recording surface, the information signal cannot be recorded and replayed accurately. To cope with this problem, the disc cartridge employs a pair of shutter plates as a shutter mechanism for closing the openings, and when the disc cartridge is not used, the two shutter plates are coupled with each there to thereby prevent formation of a gap so that dusts are unlike to enter the cartridge main body. Specifically, the pair of shutter plates of the disc cartridge are rotated in association with the rotation of the inner rotor by inserting a support shaft into shaft holes formed to the shutter plates.

However, when the disc cartridge is dropped from a high place, shells constituting the cartridge main body and the inner rotor and the shutter plates in the cartridge main body are deformed by a shock. Thus, the shutter plates rotatably attached to the support shaft may be removed from the support shaft because components constituting the disc cartridge are deformed by the shock. Further, a control projection formed to the inner rotor may be removed from cam grooves formed to the shutter plates. When the shutter plates are removed formed the support shaft or the control projection is removed from the cam grooves, the pair of shutter plates cannot close the opening of the inner rotor and the opening of the cartridge main body cannot prevent foreign matters such as dusts and the like from entering the cartridge main body. Further, when the disc cartridge is mounted on a recording and/or replay apparatus in this state, the shutters are not opened, by which a malfunction may occur in the recording and/or replay apparatus.

Further, since the components of the disc cartridge are deformed momentarily by the shock caused at the time the disc cartridge is dropped and restored at once after they are deformed, the shutter members may be clamped between, for example, other components, and thus a state that the openings are not securely closed, that is, a state that a gap is formed in the openings may be maintained. There is a possibility that foreign matters such as dusts and the like enter the cartridge main body from the gap formed as described above also in this case.

Further, when there is provided a small disc cartridge employing a small optical disc whose recording format is common to that of the optical disc used in the disc cartridge, the size of the disc cartridge cannot be simply reduced. This is because when the small disc cartridge is mounted on a recording and/or replay apparatus, a recording/ replaying opening and the like thereof into which an optical pick-up comes cannot be reduced in seize to maintain compatibility and must be as large as a recording/replaying opening of the disc cartridge of a standard size. Accordingly, in the small disc cartridge, since the ratio of opening occupying in the entire disc cartridge is increased, the strength of the disc cartridge is reduced and the disc cartridge is liable to be deformed when it is subjected to a shock. As a result, deformation of the small disc cartridge caused by a shock when it is dropped appears more outstandingly than the disc cartridge disclosed in Japanese Unexamined Patent Application Publication No. 2003-109343.

### Disclosure of the Invention

An object of the present invention, which was made in view of the above problems, is to provide a highly reliable disc cartridge which can prevent shutter plates from being removed from a predetermined member even if the cartridge is subjected to an external shock and prevent a malfunction of a recording and/or replaying apparatus as well as can prevent dusts and the like from entering the cartridge.

Specifically, an object of the present invention is to provide a highly reliable disc cartridge which ensures that one shutter plate is unlike to be removed from a support shaft of the other shutter plate.

Further, an object of the present invention is to provide a highly reliable disc cartridge which can reliably execute a recording and replaying operation by ensuring that a control projection of a rotation wheel for rotating a second shutter plate is unlike to be removed from a cam groove of the second shutter plate.

Further, an object of the present invention is to provide a disc cartridge which can prevent a first shutter plate from being removed from the rotation wheel of the first shutter plate.

Further, an object of the present invention is to provide a disc cartridge which can be assembled easily and improve productivity.

A disc cartridge according to the present invention comprises a cartridge main body composed of a lower shell to which a first opening for a recording and/or replaying apparatus is formed and an upper shell abutted against the lower shell, a rotation wheel rotatably accommodated in the cartridge main body as well as accommodating a disc therein and having a second opening formed thereto in correspondence to the first opening to locate the accommodated disc outside, and a shutter mechanism located between the lower shell and the rotation and opening the first opening and the second opening when the first opening agrees with the second opening in association with the rotation of the rotation wheel. The shutter mechanism includes a first shutter plate rotatably attached to one of the shells and a second shutter plate rotatably attached to the first shutter plate. One of the shutter plates is rotatably attached to the other shutter plate by inserting a support shaft disposed to the one shutter plate into a shaft hole formed to the other shutter plate, locking portions having a diameter larger than the shaft hole is disposed to the extreme end of the support shaft and locked to the shaft hole, thereby the shutter mechanism is prevented from being removed from the rotation wheel.

Further, a disc cartridge according to the present invention comprises a cartridge main body composed of a lower shell to which a first opening for a recording and/or replaying apparatus is formed and an upper shell abutted against the lower shell, a rotation wheel rotatably accommodated in the cartridge main body as well as accommodating a disc therein and having a second opening formed thereto in correspondence to the first opening to locate the accommodated disc outside, a shutter mechanism located between the lower shell and the rotation wheel, having a first shutter plate rotatably attached to one of the shells and a second shutter plate rotatably attached to the first shutter plate, and opening the first and second openings when the first opening agrees with the second opening in association with the rotation of the rotation wheel, and an urging member for rotating and urging the rotation wheel in a direction where the shutter mechanism opens the first and second openings. The first shutter plate is prevented from being removed from the rotation wheel by a first removal prevention mechanism. Further, the second shutter plate is prevented from being removed from the first shutter plate by a second removal prevention mechanism as well as prevented from being removed from the rotation wheel by a third removal prevention mechanism.

### Brief Description of the Drawings

Fig. 1 is a perspective view of a disc cartridge to which the present invention is applied when it is viewed from an upper shell side.
Fig. 2 is a perspective view of the disc cartridge when it is viewed from a lower shell side.
Fig. 3 is an exploded perspective view of the cartridge.
Fig. 4 is a plan view of the upper shell constituting the disc cartridge when it is viewed from the inner surface side thereof.
Fig. 5 is a perspective view of a main portion of the upper shell on the front surface side thereof.
Fig. 6 is a plan view of the lower shell constituting the disc cartridge when it is viewed from the inner surface side thereof.
Fig. 7 is a plan view of a main portion for explaining a relation between an insertion guide groove and an insertion guide pin.
Fig. 8 is a perspective view of a rotation wheel when it is viewed from a surface on which an optical disc is accommodated.
Fig. 9 is a perspective view of the rotation wheel when it is viewed from a surface on a lower shell side.
Fig. 10 is a perspective view of a main portion explaining a to-be-actuated portion formed to the rotation wheel.
Fig. 11 is a perspective view of a main portion explaining a shutter plate floating prevention mechanism.
Fig. 12 is a sectional view of a main portion of a locking projection of an urging member for urging the rotation wheel in one direction.
Fig. 13 is a perspective view showing shutter plates and the rotation wheel.
Fig. 14 is a sectional view of a main portion showing a rotation support structure of a first shutter plate.
Fig. 15 is a perspective view of a main portion showing a relation between the first shutter plate and a second shutter plate.
Fig. 16 is a perspective view of a main portion showing a support structure of the second shutter plate attached to the first shutter plate.
Fig. 17 is a perspective view of a main portion of a rotation support portion disposed to the second shutter plate.
Fig. 18 is a perspective view of a main portion showing a relation between the second shutter plate and the rotation wheel.
Fig. 19 is a plan view showing a state that the shutter plates close the opening omitting the lower shell and the optical disc.
Fig. 20 is a plan view showing a state that the shutter plates open the opening omitting the lower shell and the optical disc.
Fig. 21 is an exploded perspective view of a lock mechanism.
Fig. 22 is a sectional view of a main portion of the rotation wheel showing a relation between a taper portion of the rotation wheel and a lock groove.
Fig. 23 is a sectional view of a main portion showing a state that a locking release pin is not inserted into an insertion guide groove in which a locking release piece is located.
Fig. 24 is a sectional view of a main portion showing a state that the locking release pin is inserted into the insertion guide groove.
Fig. 25 is a plan view showing a relation among the insertion guide groove, a location hole and an alignment hole.
Fig. 26 is a perspective view of the disc cartridge showing a state that a first opening is opened.
Fig. 27 is a perspective view of a disc cartridge to which the present invention is applied when it is viewed from an upper shell side.
Fig. 28 is a perspective view of the disc cartridge when it is viewed from a lower shell side.
Fig. 29 is an exploded perspective view of the disc cartridge.
Fig. 30 is a plan view of the upper shell constituting the disc cartridge when it is viewed from the inner surface thereof.
Fig. 31 is a plan view of the lower shell constituting the cartridge when it is viewed from the inner surface side thereof.
Fig. 32 is a perspective view of a rotation wheel when it is viewed a surface on which an optical disc is accommodated.
Fig. 33 is a perspective view of the rotation wheel when it is viewed from a surface on a lower shell side.
Fig. 34 is an exploded perspective view of shutter plates and the rotation wheel.
Fig. 35 is a perspective view showing a state that first and second shutter plates are assembled on the rotation wheel and located at a closed position.
Fig. 36 is a sectional view of a main portion of a first removal prevention mechanism.
Fig. 37 is a perspective view showing a state that the first and second shutter plates are assembled to the lower shell and close a first opening when they are viewed from the inside of the lower shell.
Fig. 38 is an exploded perspective view of a main portion showing a relation between the first and second shutter plates.
Fig. 39 is a perspective view of a main portion showing second and third removal prevention mechanisms.
Fig. 40 is a plan view showing a state that the first and second shutter plates close first and second openings omitting the upper shell and the optical disc.
Fig. 41 is a plan view showing a mid-step at which the first and second shutter plates open the first and second openings omitting the upper shell and the optical disc.
Fig. 42 is a plan view showing a state that the first and second shutter plates open the first and second openings omitting the upper shell and the optical disc.
Fig. 43 is a perspective view of the disc cartridge showing a state that the first opening is opened.

### Best Mode for Carrying Out the Invention

A disc cartridge to which the present invention is applied will be explained below with reference to the drawings. The disc cartridge, to which the present invention is applied is, a small disc cartridge which can be also mounted on a recording and/or replaying apparatus for the standard size disc cartridge disclosed in Japanese Unexamined Patent Application Publication No. 2003-109343. The disc cartridge disclosed in Japanese Unexamined Patent Application Publication No. 2003-109343 uses an optical disc having a diameter of about 12 cm as a recording medium, whereas the disc cartridge, to which the present invention is applied, uses an optical disc having a diameter smaller than the optical disc of the standard size disc cartridge. Since the disc cartridge, to which the present invention is applied, is formed in a small size and uses the optical disc whose diameter is smaller than that used in the disc cartridge disclosed in Japanese Unexamined Patent Application Publication No. 2003-109343, it is excellent in portability although the recording capacity thereof is smaller than the standard size disc cartridge.

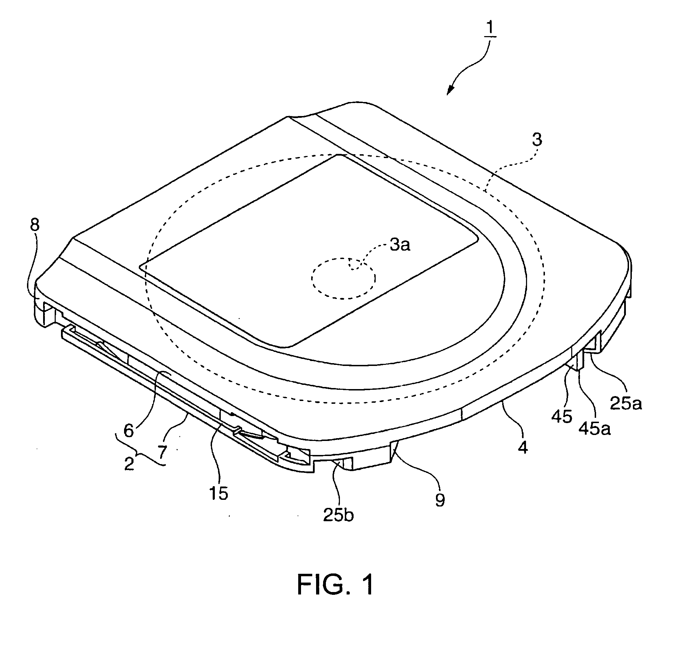

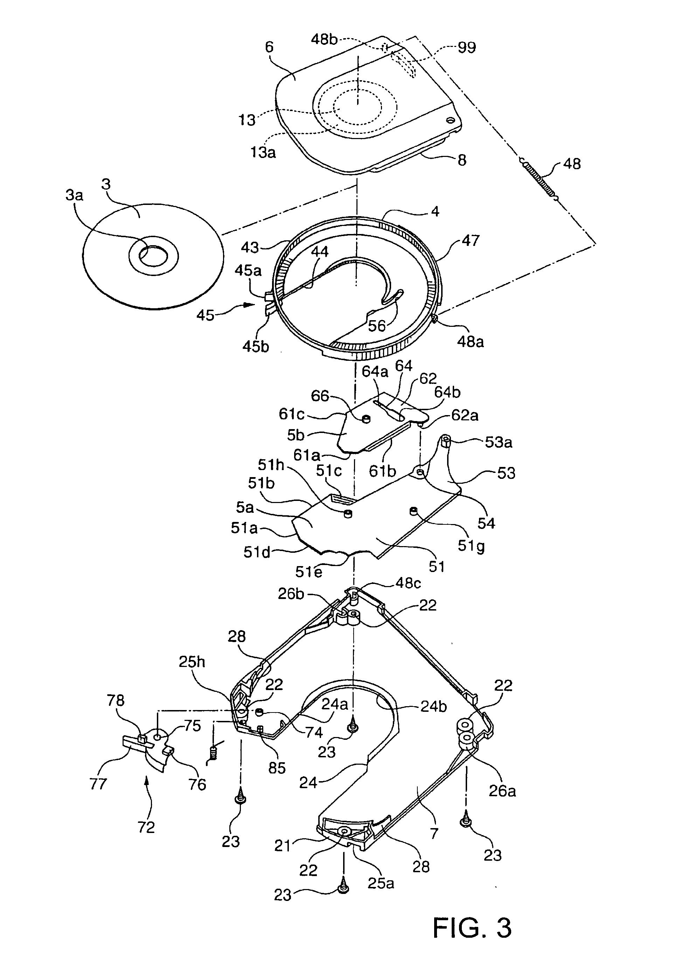

As shown in Figs. 1 to 3, the disc cartridge 1, to which the present invention is applied, accommodates a rotation wheel 4 and a pair of first and second shutter plates 5a and 5b acting as a shutter mechanism in a cartridge main body 2, and an optical disc 3 is accommodated in the rotation wheel 4. The cartridge main body 2 is composed by abutting a set of an upper shell 6 and a lower shell 7, which are to be combined with each other, against each other.

The optical disc 3 used in the disc cartridge 1 has a center hole 3a formed at a center, and a disc rotation drive mechanism of a recording and/or replaying apparatus is engaged with the center hole 3a. Note that the optical disc 3 may be a replay only optical disc having a pit pattern formed on a disc substrate in correspondence to an information signal to be recorded, a rewritable optical disc using a phase change material in a recording layer, or further a write once optical disc using an organic pigment material and the like in a recording layer. Further, a magneto-optic disc, a magnetic disc, and the like may be used as a recording medium to be used, in addition to the optical disc, and further a cleaning disc may be used.

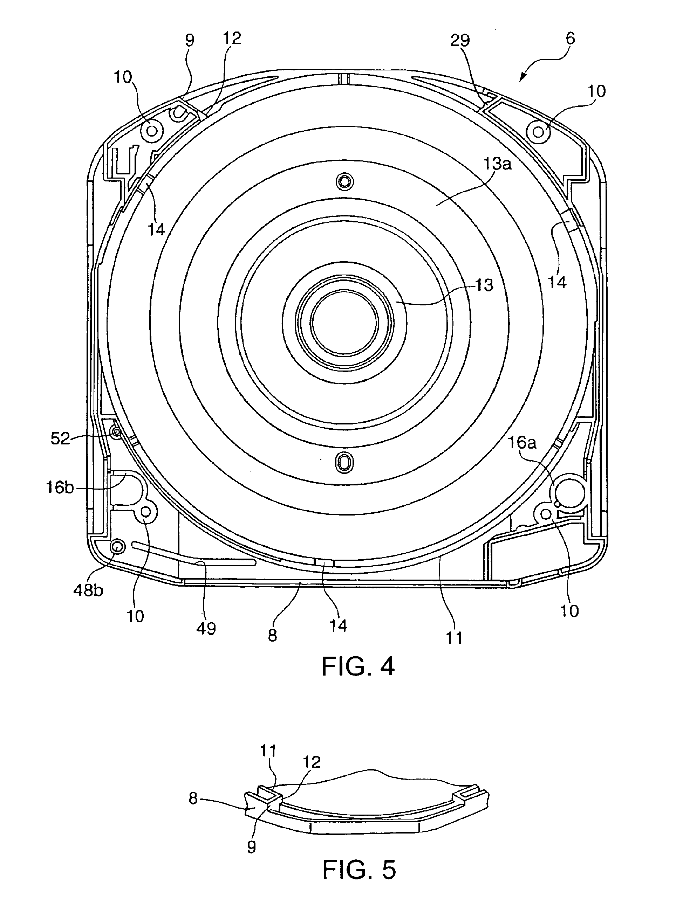

As shown in Fig. 4, the upper shell 6 constituting the cartridge main body 2 is formed by injection molding a resin material. A main surface of the upper shell 6 is formed in an approximately rectangular-shape in its entirety, and a front surface, which acts as an insertion end side to the recording and/or replaying apparatus, of the main surface is formed in an approximately arc shape. Further, an outer peripheral wall 8, which forms a side surface of the cartridge main body 2, is standingly formed around the outer peripheral edge of the main surface of the upper shell 6.

A first pick-up entering recess 9 is formed to the outer peripheral wall 8 at the center of a front surface so that an optical pick-up of the recording and/or replaying apparatus enters it. Further, a plurality of bosses 10, which have screw holes formed therein, are formed in the vicinities of the respective corners of the outer peripheral wall 8 to couple the lower shell 7 through the screw holes.

An approximately annular inner peripheral wall 11 is formed to the inner periphery of the outer peripheral wall 8 so as to inscribe it, and the rotation wheel 4 is rotatably accommodated in the inner peripheral wall 11. As shown in Fig. 5, the inner peripheral wall 11 is located at the center of the front surface and has a second pick-up entering recess 12 formed thereto so that the optical pick-up of the recording and/or replaying apparatus enter therethrough. The inner peripheral wall 11 rotatably accommodates the rotation wheel 4 therein and acts as a guide wall when the rotation wheel 4 is rotated. When the rotation wheel 4 is accommodated, the main surface portion of the upper shell 6 constitutes a disc accommodating section together with the rotation wheel 4. Further, a lifter 14 is formed in an inside base end portion of the inner peripheral wall 11 in the vicinity of the second pick-up entering recess 12 to lift the rotation wheel 4. When the first and second shutter plates 5a and 5b close a first opening 24, the lifter 14 lifts the rotation wheel 4 to the lower shell 7 side.

A clamping plate 13 is attached to approximately the center of an inner surface of the upper shell 6 to clamp the optical disc 3 together with a disc table constituting a disc rotation drive unit of the recording and/or replaying apparatus. The clamping plate 13 is attached by an attachment ring 13a. Specifically, the clamping plate 13 is attached in such a manner that it is clamped between the attachment ring 13a and approximately the center of the inner surface of the upper shell 6, and the attachment ring 13a is fixed to approximately the center of the inner surface of the upper shell 6 by welding and the like. The optical disc 3 can be rotated freely in a disc accommodation section in such an arrangement that the disc table is engaged with the center hole 3a and further the optical disc 3 is clamped between the disc table and the clamping plate 13.

Note that a standing wall 16a constituting a location hole 26a of the lower shell 7 and a standing wall 16b constituting an alignment hole 26b thereof, which will be described later, are further formed to the inner surface of the upper shell 6.

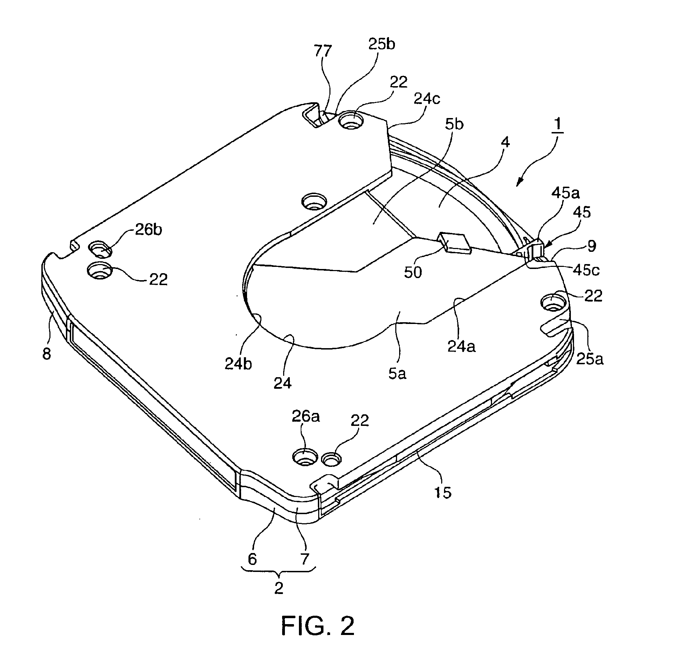

As shown in Figs. 2, 3, and 6, the lower shell 7, which is coupled with the upper shell 6 arranged as described above, is formed by injection molding a resin material likewise the upper shell 6 described above. The lower shell 7 has an approximately rectangular-shaped main surface in its entirety, and a front surface, which is inserted into the recording and/or replaying apparatus, of the main surface, is formed in an approximately arc shape. An outer peripheral wall 21 forming a side surface of the cartridge main body 2 is standingly formed around the outer peripheral edge of the main surface, and further an inner peripheral wall 28 is formed to inscribe the outer peripheral wall 21.

A first opening 24 is formed by opening the central portion of the front surface of the outer peripheral wall 21 such that the optical pick-up and the disc table can enter the opening 24. The first opening 24 is composed of an approximately rectangular optical pick-up opening 24a and a rotation drive opening 24b. The optical pick-up opening 24a locates a part of a signal recording surface of the optical disc 3 outside over the inner and outer peripheries thereof from an open end of the front surface thereof, and the rotation drive opening 24b locates the center hole 3a of the optical disc 3, which is formed continuously to the optical pick-up opening 24a, outside. That is, the optical pick-up opening 24a is formed to a size sufficient to cause the optical pick-up of the recording and/or replaying apparatus to enter into the cartridge main body 2, and the rotation drive opening 24b is formed to a size sufficient to cause the disc table, which constitutes a disc rotation drive mechanism of the recording and/or replaying apparatus, to enter into the cartridge main body 2. Further, a taper portion 24c is formed to one of the opening ends of the optical pick-up opening 24b so as to incline in a direction where the opening end is widened. The taper portion 24c is a portion in which a to-be-actuated portion 45 of the rotation wheel 4, which will be described later, is accommodated when the to-be-actuated portion 45 is located at a position where the first and second shutter plates 5a and 5b open the first opening 24.

A plurality of projections 27 are formed to one of the side edge portions of the recording/replaying opening 24a and to one of the side edges of the rotation drive opening 24b each constituting the first opening 24 to prevent dusts and the like from entering the cartridge main body 2 when the pair of first and second shutter plates 5a and 5b close the first opening 24.

Further, bosses 22, in which through holes are formed, are formed on the back surface of the outer peripheral wall 21 so as to be abutted against the bosses 10, in which the screw holes are formed, of the upper shell 6. As shown in Fig. 2, the upper shell 6 is coupled with the lower shell 7 by inserting screws 23 from the through holes of the bosses 22 of the lower shell 7 and screwing them into the screw holes of the bosses 10 of the upper shell 6.

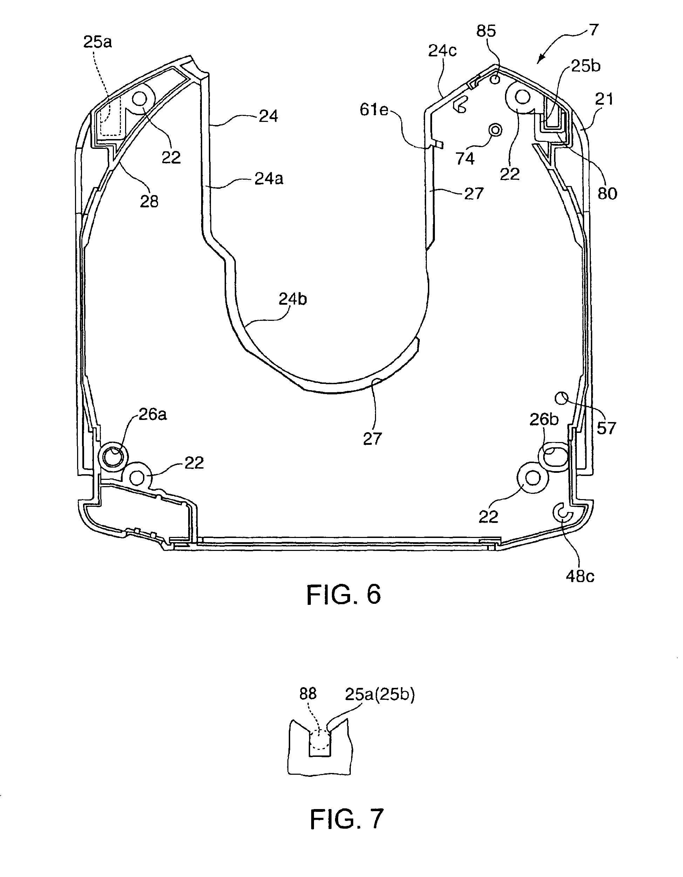

Further, insertion guide grooves 25a and 25b are formed on the front surface of the lower shell 7 on both the sides thereof, and when the disc cartridge 1 is inserted into the recording and/or replaying apparatus, insertion guide members of the recording and/or replaying apparatus are engaged with the insertion guide grooves 25a and 25b. As shown in Fig. 7, each of the insertion guide grooves 25a and 25b is formed widest at the opening end on the front surface so that insertion guide pins 88 can be easily inserted thereinto. Note that the deepest portion of each of the insertion guide grooves 25a and 25b may be formed to have a width approximately the same as the thickness of the insertion guide pins 88. With this arrangement, even if the disc cartridge 1 is mounted on a mounting portion of the recording and/or replaying apparatus, it can be positioned in a surface direction, thereby rattling of the disc cartridge 1 can be prevented. Further, although described later, the insertion guide groove 25b on the one hand is provided with a lock mechanism 71, a lock release piece 77 of a lock member 72 constituting the lock mechanism 71 is located in the insertion guide groove 25b, and the insertion guide pin 88 engaged with the insertion guide groove 25b acts as a lock release pin for pressing the lock release piece 77.

Further, as shown in Figs. 2 and 6, the location hole 26a is formed in the vicinity of one of the corners of the lower shell 7 on the back surface thereof and acts as a reference hole for positioning and mounting the disc cartridge 1 to and on the recording and/or replaying apparatus. Further, the adjustment alignment hole 26b is formed in the vicinity of the other corner.

Note that, as shown in Figs. 1 and 2, guide grooves 15 for guiding the cartridge main body 2, when it is inserted into the recording and/or replaying apparatus, are formed on both the side surface portions of the cartridge main body 2 composed of the upper shell 6 and the lower shell 7 abutted against each other, the side surface portions being parallel to a direction where the cartridge main body 2 is inserted into the recording and/or replaying apparatus.

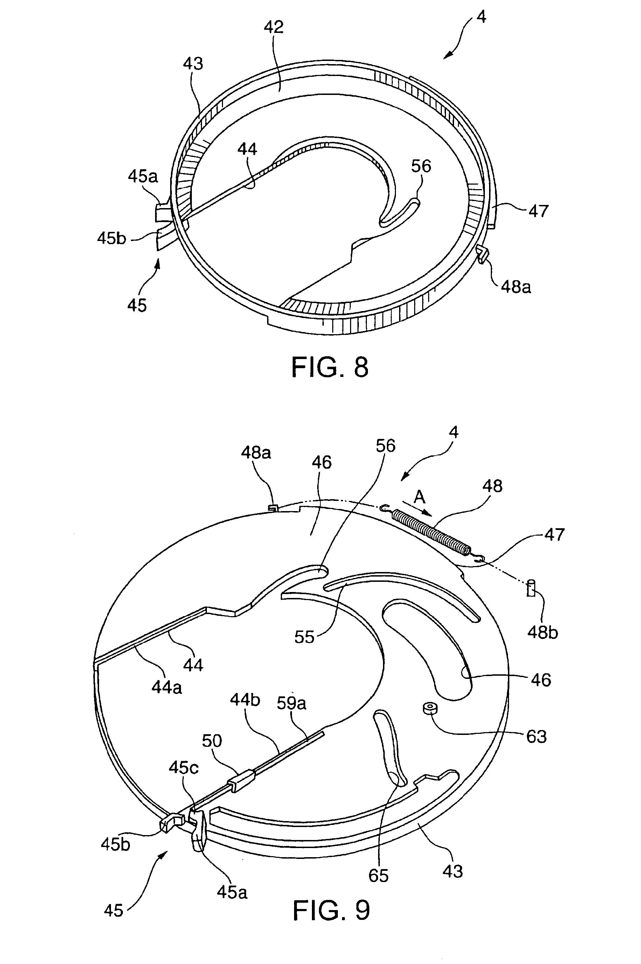

When the upper shell 6 is abutted against the lower shell 7, an accommodating section, in which the rotation wheel 4 is accommodated, is formed inside of the inner peripheral wall 11. As shown in Figs. 8 and 9, the rotation wheel 4 accommodated in the accommodating section is formed by injection molding a resin material. A main surface portion of the rotation wheel 4 is formed in an approximately plate shape, and when a recessed side thereof is disposed in the cartridge main body 2, the disc accommodating section is formed by the upper shell 6 and a main surface of one of the first and second shutter plates 5a and 5b. The rotation wheel 4 is formed in an approximately circular shape, and a ring portion 43 is standingly formed around the outer peripheral edge thereof. A second opening 44, which is approximately as large as the first opening 24 formed to the lower shell 7, is formed to the main surface portion of the rotation wheel 4.

When the second opening 44 agrees with the first opening 24 of the lower shell 7, the accommodated optical disc 3 is located outside. That is, the second opening 44 is composed of an opening corresponding to the optical pick-up opening 24a of the first opening 24 and an opening corresponding to the rotation drive opening 24b thereof. Further, the second opening 44 is formed so as to be gradually widened from a center to an outer periphery to absorb an error between it and the first opening 24 so that the first opening 24 is not reduced in size due to a manufacturing error and a mounting error of the rotation wheel 4. For example, the second opening 44 is formed such that both the side edges or one of them inclines about 1° outside.

Note that, when any one of the side edges is to be inclined outside, it is preferable to incline the side edge opposite to the to-be-actuated portion 45. This is to prevent the first opening 24 from being narrowed by that one of the side edges of the second opening 44 of the rotation wheel 4 is located inward of one of the side edges of the first opening 24 of the lower shell 7 in the radius direction thereof when the first and second openings 24 and 44 are opened by rotating the first and second shutter plates 5a and 5b by rotating the rotation wheel 4 and the rotation wheel 4 is excessively rotated from a predetermined position by an error and the like.

Further, as shown in Fig. 8, a taper portion 42 inclining to the main surface portion is formed to the base end portion of the ring portion 43. The taper portion 42 supports the outer peripheral edge of the optical disc 3 in edge contact therewith, and the signal recording surface of the optical disc 3 is in surface contact with the main surface portion of the rotation wheel 4, thereby the signal recording surface is prevented from being scratched.

Further, as shown in Fig. 2, the pair of first and second shutter plates 5a and 5b are located on an outside surface of the second opening 44. Thus, as shown in Fig. 9, the taper portions 44a and 44b are formed to confront the side edge portions of the second opening 44 to prevent the pair of first and second shutter plates 5a and 5b from entering the second opening 44. Further, an engagement groove 50 is formed to the rotation wheel 4 so that the first shutter plate 5a is engaged with the engagement groove 50 and prevented from floating upward thereby when the first and second shutter plates 5a and 5b close the first and second openings 24 and 44. The engagement groove 50 is formed of a piece having an approximately L-shaped cross section with its opening end located on a side edge portion side of the first opening 24.

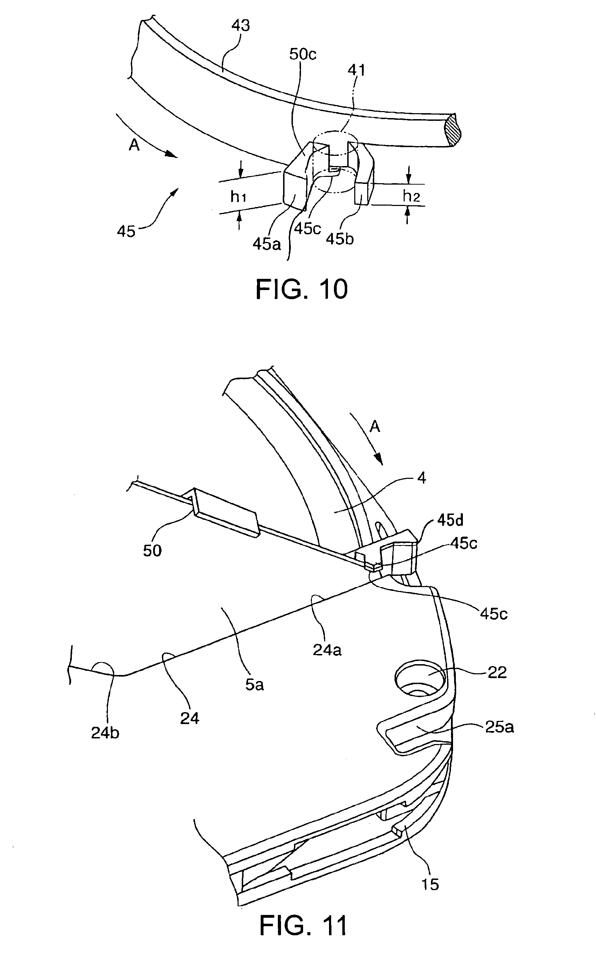

As shown in Fig. 10, the to-be-actuated portion 45 is formed in the vicinity of the second opening 44 of the rotation wheel 4 and projects outside, and a shutter open pin 41, which constitutes a shutter open mechanism of the recording and/or replaying apparatus, is engaged with the to-be-actuated portion 45. The to-be-actuated portion 45 has a first to-be-actuated piece 45a and a second to-be-actuated piece 45b which open the recording and/or replaying apparatus side of the to-be-actuated portion 45 and form a recess, and the shutter open pin 41 of the recording and/or replaying apparatus is engaged with the recess. The first to-be-actuated piece 45a is a piece against which the shutter open pin 41 is abutted when the rotation wheel 4 is rotated in a direction where the first and second shutter plates 5a and 5b open the first and second openings 24 and 44. Whereas, the second to-be-actuated piece 45b is a piece against which the shutter open pin 41 abutted when the rotation wheel 4 is rotated in a direction where the first and second shutter plates 5a and 5b close the first and second openings 24 and 44. Although described later, the rotation wheel 4 is urged by an urging member 48 in the direction of an arrow A in Fig. 10 where the first and second shutter plates 5a and 5b close the first and second openings 24 and 44, and thus a larger amount of force is applied to the first to-be-actuated piece 45a than the second to-be-actuated piece 45b. Accordingly, the first to-be-actuated piece 45a is made larger in size than the second to-be-actuated piece 45b to increase its mechanical strength, and here a height h1 of the first to-be-actuated piece 45a is set higher than a height h2 of the second to-be-actuated piece 45b. Then, the first to-be-actuated piece 45a is made higher than the second to-be-actuated piece 45b so that the mechanical strength thereof is increased and further the shutter open pin 41 is more reliably engaged.

Further, as shown in Figs. 10 and 11, the first to-be-actuated piece 45a has an engagement piece 45d formed at an extreme end and bent inward. When the rotation wheel 4 is rotated in the direction where the first and second shutter plates 5a and 5b close the first and second openings 24 and 44, the engagement piece 45d prevents the shutter open pin 41 of the recording and/or replaying apparatus from being disengaged from the recess composed of first to-be-actuated piece 45a and the second to-be-actuated piece 45b. The engagement piece 45d may be disposed to any of the extreme ends of the first and second to-be-actuated pieces 45a and 45b, it is preferably disposed to the extreme end of the first to-be-actuated piece 45a. This is because, when the rotation wheel 4 is rotated in the direction of the arrow A of Fig. 10, the first to-be-actuated piece 45a acts as a piece against which the shutter open pin 41 of the recording and/or replaying apparatus is abutted.

Note that the shutter open pin 41 of the recording and/or replaying apparatus is inserted from a gap between the extreme end of the engagement piece 45d and the second to-be-actuated piece 45b. Further, when the rotation wheel 4 is rotated, the to-be-actuated portion 45 draws an arc locus, thereby the direction of the opening of the to-be-actuated portion 45 is changed according to the locus of the to-be-actuated portion 45. Although the engagement piece 45d as described above is formed by bending the first to-be-actuated piece 45a toward the second to-be-actuated piece 45b, a size of the engagement piece 45d, that is, an amount of projection and a degree of inclination thereof to the inside of the recess are determined such that the shutter open pin 41 is continuously engaged with the engagement piece 45d at all times while the rotation wheel 4 is being rotated.

The to-be-actuated portion 45 arranged as described above is exposed to the outside from the front surface of the lower shell 7 to which the first opening 24 is formed as the rotation wheel 4 is rotated and moved in the width direction of the first opening 24. When the first and second shutter plates 5a and 5b open the first opening 24, the to-be-actuated portion 45 is located in a portion widened by the taper portion 24c.

As shown in Fig. 11, the to-be-actuated portion 45 has an engagement groove 45c which is formed to the base end portions of the first and second to-be-actuated pieces 45a and 45b and engaged with the first shutter plate 5a. When the first and second shutter plates 5a and 5b close the first and second openings 24 and 44, the engagement groove 45c is engaged with the first shutter plate 5a to thereby prevent it from floating up and down. Accordingly, no gap is formed between the peripheral edge of the first opening 24 and the first shutter plate 5a, thereby dusts and the like can be prevented from entering the cartridge main body 2. More specifically, the engagement groove 45c of the to-be-actuated portion 45 prevents the first shutter plate 5a from floating up and down together with the engagement groove 50 formed in the vicinity of the second opening 44 of the rotation wheel 4. Accordingly, no gap is formed between the second opening 44 and the first shutter plate 5a, thereby dusts and the like can be prevented from entering the cartridge main body 2.

Note that, as shown in Fig. 4, the second to-be-actuated piece 45b is abutted against a regulating portion 29, which couples the outer peripheral wall 8 of the upper shell 6 with the inner peripheral wall 11 thereof that confronts a part of the peripheral edge portion of the first opening 24 of the lower shell 7 to thereby regulate a rotating region of the rotation wheel 4.

The rotation wheel 4 arranged as described above is rotated and abutted by the urging member 48, which is composed a coil spring and the like, in the direction where the first and second shutter plates 5a and 5b close the first and second openings 24 and 44. The urging member 48 has one end locked to a locking piece 48a formed to the ring portion 43 of the rotation wheel 4 and the other end locked to a locking projection 48b formed on the inner surface of the upper shell 6 shown in Fig. 4. Although the urging member 48 is extended and contracted as the rotation wheel 4 rotates, it is guided by a guide groove 49, which is formed of a standing wall formed outside of the inner peripheral wall 11 in the inner surface of the upper shell 6 and the outer peripheral wall 8. As a result, the urging member 48 does not run away in the cartridge main body 2 when it is extended and contracted. Further, as shown in Figs. 8 and 9, a flange portion 47 is formed around an outer peripheral edge of the rotation wheel 4 to approximately close the guide groove 49.

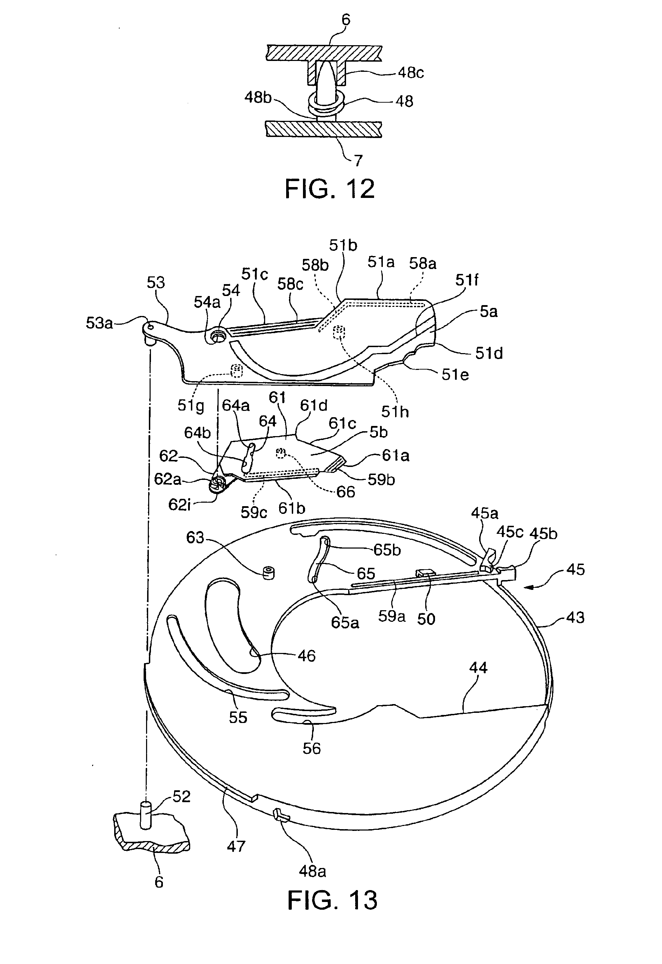

Note that, as shown in Fig. 12, when the upper shell 6 is coupled with the lower shell 7, the extreme end of the locking projection 48b formed on the inner surface of the upper shell 6 is engaged with an approximately cylindrical reinforcing rib 48c formed on the inner surface of the lower shell 7, thereby the locking projection 48b to which urging force is applied from the urging member 48 is reinforced.

In the rotation wheel 4 arranged as described above, the first and second shutter plates 5a and 5b are urged by the urging member 48 in the direction where the first and second openings 24 and 44 are closed, and the to-be-actuated portion 45 is rotated by the shutter open pin 41 of the recording and/or replaying apparatus in the direction where the first and second shutter plates 5a and 5b open the first and second openings 24 and 44. At the time, the inner peripheral wall 11 acts as a guide wall when the rotation wheel 4 is rotated.

As shown in Fig. 13, in the pair of first and second shutter plates 5a and 5b, which constitute the shutter mechanism for opening and closing the first opening 24 formed to the lower shell 7 and the second opening 44 formed to the rotation wheel 4, the first shutter plate 5a is formed large, and the second shutter plate 5b is formed smaller than the first shutter plate 5a.

As shown in Fig. 13, the first shutter plate 5a that is large includes a first shutter portion 51, a first rotation support portion 53, and a second shaft hole 54. The first shutter portion 51 closes the first and second openings 24 and 44, the first rotation support portion 53 is rotatably supported by a first support shaft 52 formed between the outer peripheral wall 8 and the inner peripheral wall 11 in the inner surface of the upper shell 6, and the second shutter plate 5b that is small is attached to the second shaft hole 54.

The first shutter portion 51 includes a first side edge portion 51a, which is located at one side edge of the second opening 44 of the rotation wheel 4 when the second opening 44 is closed, a second side edge portion 51b formed continuous to the first side edge portion 51a, and a third side edge portion 51c formed continuously to the second side edge portion 51b. The second side edge portion 51b is formed by being bent inward of the first side edge portion 51a, and the third side edge portion 51c is formed by being bent outward of the second side edge portion 51b. Further, a fourth side edge portion 51d, which is in confrontation with the first to third side edge portions 51a to 51c, has a wave-line-shaped escape portion 51e formed thereto to escape the bosses 10 and 22, the location hole 26a, an erroneous record prevention member, and the like formed to one corners of the upper and lower shells 6 and 7 can be escaped thereto. The second side edge portion 51b and the third side edge portion 51c are composed of taper portions in an opposite direction. Further, the first side edge portion 51a is engaged with the engagement groove 50 formed to the rotation wheel 4, thereby floating of the rotation wheel 4 can be prevented.

Further, a groove portion 51f is formed to the first shutter portion 51 on the lower shell 7 side surface thereof and engaged with a projection 27 formed to the peripheral edge portion of the first opening 24 of the lower shell 7. When the first and second shutter plates 5a and 5b close the first and second openings 24 and 44, the rotation wheel 4 is lifted to the lower shell 7 side by the lifter 14 of the upper shell 6, and the groove portion 51f is engaged with the projection 27 formed to the peripheral edge of the first opening 24, thereby dusts and the like are prevented from entering the cartridge main body 2.

Further, a guide projection 51g is formed to the first shutter portion 51 on the optical disc 3 side surface thereof and engaged with a guide groove 55 formed on the main surface portion of the rotation wheel 4. The guide projection 51g is engaged with the guide groove 55 of the rotation wheel 4 to thereby regulate rotation of the first shutter plate 5a by being. Further, a regulation projection 51h is formed to the first shutter portion 51 on the optical disc 3 side surface thereof to regulate displacement of the first shutter plate 5a. When the first and second shutter plates 5a and 5b close the first and second openings 24 and 44, the regulation projection 51h is disposed at a position corresponding to an inner periphery side non-signal recording region around the center hole 3a of the optical disc 3 to thereby prevent a signal recording region of the optical disc 3 from being scratched even if the first shutter plate 5a is pressed and displaced inward. When the first and second shutter plates 5a and 5b open the first and second openings 24 and 44, the regulation projection 51h enters an escape groove 56 formed near to the center of the rotation wheel 4 so as not to interfere with rotation of the first shutter plate 5a.

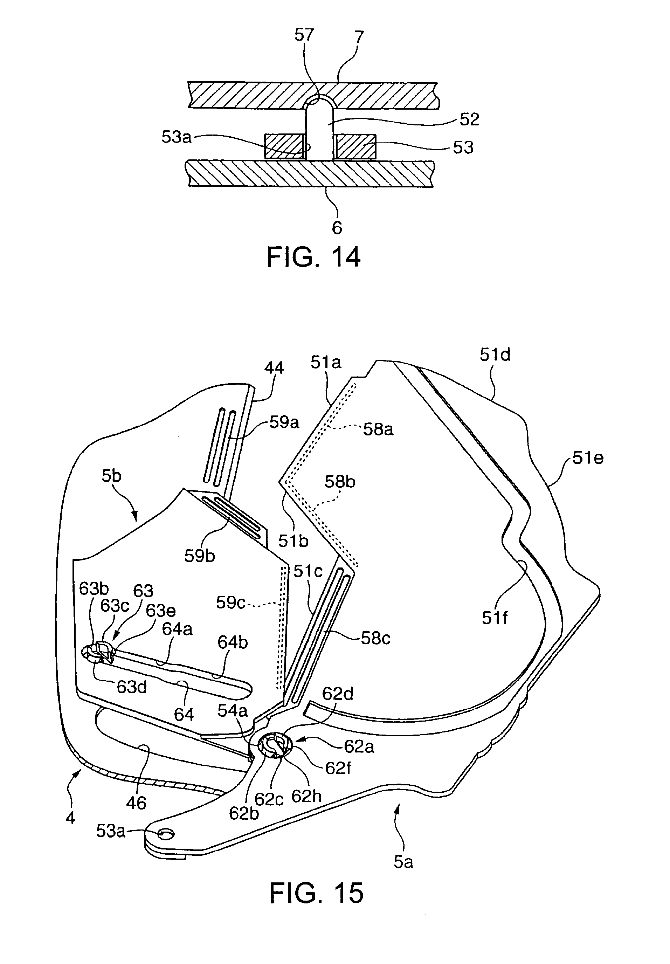

A first shaft hole 53a is formed to the first rotation support portion 53 of the first shutter plate 5a. The first shaft hole 53a is formed thicker than the first shutter portion 51 to increase its strength, and the first support shaft 52 formed to the upper shell 6 is inserted into the first shaft hole 53a. As shown in Fig. 14, the first support shaft 52 is formed to such a height that when it is inserted into the first shaft hole 53a, it projects from the first rotation support portion 53. The extreme end of the first support shaft 52 is engaged with a shaft receiver formed to the lower shell 7 to prevent the first rotation support portion 53 from being removed from the first shutter plate 5a even if a shock due to drop and the like is applied to the lower shell 7 as well as to reinforce the strength of the first support shaft 52. Note that the first shutter plate 5a may be journaled by a support shaft formed to the lower shell 7 in place of the first support shaft 52.

As shown in Fig. 13, the second shutter plate 5b engaged with the first shutter plate 5a as described above includes a second shutter portion 61 for closing the first and second openings 24 and 44 together with the first shutter portion 51 and a second rotation support portion 62 attached to the second shaft hole 54 formed to the first shutter plate 5a.

The second shutter portion 61 includes a first side edge portion 61a, a second side edge portion 61b, and a third side edge portion 61c. The first side edge portion 61a is engaged with the second side edge portion 51b of the first shutter portion 51, the second side edge portion 61b is formed continuously to the first side edge portion 61a and engaged with the third side edge portion 51c of the first shutter portion 51, and the third side edge portion 61c is formed continuously to the first side edge portion 61a and located opposite to the second side edge portion 61b. The first side edge portion 61a is composed of a taper portion in a direction opposite to a taper portion of the second side edge portion 51b of the first shutter portion 51, and the second side edge portion 61b is composed of a taper portion in a direction opposite to a taper portion of the third side edge portion 51c of the first shutter portion 51. Further, the taper portion of the first side edge portion 61a and the taper portion of the second side edge portion 61b are also formed in an opposite direction. When the first and second shutter plates 5a and 5b close the first and second openings 24 and 44, the second side edge portion 51b of the first shutter portion 51 is meshed with taper portion of the first side edge portion 61a of the second shutter portion 61, and further the taper portion of the third side edge portion 51c of the first shutter portion 51 is meshed with the taper portion of the second side edge portion 61b of the second shutter portion 61 in an opposite direction, respectively. Accordingly, when the pair of first and second shutter plates 5a and 5b close the first and second openings 24 and 44, the first and second shutter plates 5a and 5b are meshed with each other to thereby prevent dusts and the like from entering inward of a coupling portion as well as make themselves unlike to flex when they are pressed.

Further, as shown in Figs. 13 and 15, a first linear recess 58a is formed to the first side edge portion 51a of the first shutter portion 51, and a first projection 59a, with which the recess 58a is engaged, is formed to the side edge portion of the second opening 44 of the rotation wheel 4 meshed with the first side edge portion 51a. A second linear recess 58b is formed to the second side edge portion 51b of the first shutter portion 51, and a second projection 59b, which is engaged with the second recess 58b, is formed to the first side edge portion 61a meshed with the second side edge portion 51b. Further, a third linear recessed groove 58c is formed to the third side edge portion 51c of the first shutter portion 51, and a third projection 59c is formed to the second side edge portion 61b meshed with the third side edge portion 51c. When the first and second shutter plates 5a and 5b close the first and second openings 24 and 44, the first to third recesses 58a to 58c are engaged with the first to third projections 59a to 59c to thereby prevent dusts and the like from entering inward from the coupling portion. Note that the shutter plates to which the recesses and the projections are formed are not limited to the above example, and even if the shutter plates are arranged opposite to the above example, the same effect can be obtained.

Further, as shown in Fig. 11, when the first and second shutter plates 5a and 5b close the first and second openings 24 and 44, the first shutter plate 5a is engaged with the engagement groove 45c of the to-be-actuated portion 45 formed to the rotation wheel 4, and further the first side edge portion 51a of the first shutter portion 51 is engaged with the engagement groove 50, thereby the first shutter plate 5a can be prevented from floating up and down. Accordingly, no gap is formed between the peripheral edge portion of the first opening 24 and the first shutter plate 5a, thereby dusts and the like can be prevented from entering the cartridge main body 2.

Further, as shown in Fig. 13, a projection 61d is formed to the end of the third side edge portion 61c opposite to the first side edge portion 61a. When the second shutter plate 5b closes the first and second openings 24 and 44, the projection 61d is engaged with an engagement portion 61e formed in the vicinity of the first opening 24 on the front surface side of the lower shell 7 shown in Fig. 6, thereby dusts and the like are prevented from entering from the gap between the first opening 24 and the second shutter plate 5b.

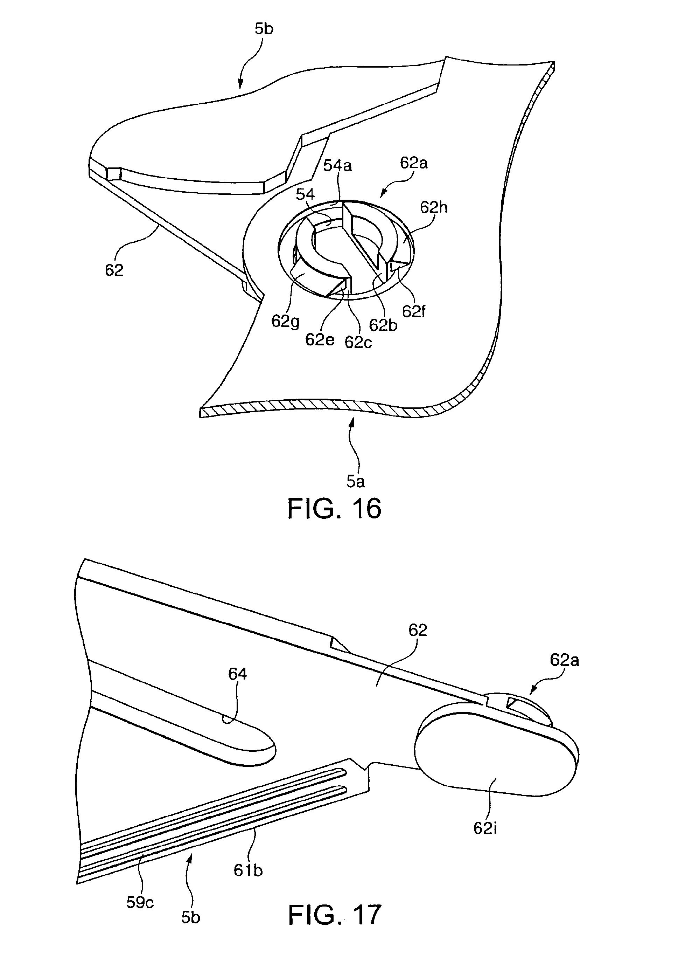

As shown in Figs. 13, 16, 17, and 18, a second support shaft 62a is formed to the second rotation support portion 62 and inserted into the second shaft hole 54 formed to the first rotation support portion 53 of the first shutter plate 5a. Specifically, the second rotation support portion 62 is composed of elastic pieces 62c and 62d formed through a slit 62b, and further locking portions 62e and 62f expanding from extreme end sides are formed to the extreme ends of the elastic pieces 62c and 62d. These locking portions 62e and 62f are arranged as guide portions 62g and 62h whose outer surfaces are composed of an R surface (curved surface) or a C surface (inclining surface). The base ends of the locking portions 62e and 62f are formed larger than the diameter of the second shaft hole 54 of the first shutter plate 5a into which the second support shaft 62a is inserted. Further, a recess 54a, to which the locking portions 62e and 62f are locked, is formed around the second shaft hole 54. The second support shaft 62a is guided by the guide portions 62g and 62h and inserted into the second shaft hole 54. At the time, the elastic pieces 62c and 62d are elastically displaced in a direction where they approach to each other to thereby permit the second support shaft 62a to be inserted into the second shaft hole 54, and when the locking portions 62e and 62f are inserted, the elastic pieces 62c and 62d are elastically restored. With this arrangement, the locking portions 62e and 62f are locked to the bottom surface of the recess 54a around the second shaft hole 54. The disc cartridge 1 can be formed thin in its entirety by positioning the locking portions 62e and 62f in the recess 54a. As described above, the second support shaft 62a is securely locked to the second shaft hole 54 by the locking portions 62e and 62f so that it is not removed from the second shaft hole 54 by a shock due to drop and the like. Note that the number of the elastic pieces 62c and 62d is not limited to two and three or more elastic pieces may be employed.

Note that when the second support shaft 62a is formed of a resin material, the locking portions 62e and 62f described above may be formed by melting the extreme ends of the elastic pieces 62c and 62d by an ultrasonic wave or heat. Further, the second support shaft 62a may be formed without being provided with the slit 62b, that is, without being divided and then may be provided with a locking portion by melting its extreme end with an ultrasonic wave or heat after it is inserted into the second shaft hole 54. Further, the case, in which the second support shaft 62a is disposed to the second shutter plate 5b and the second shaft hole 54 is disposed to the first shutter plate 5a, is explained in the above example. However, the second shaft hole 54 may be disposed to the second shutter plate 5b and the second support shaft 62a may be disposed to the first shutter plate 5a.

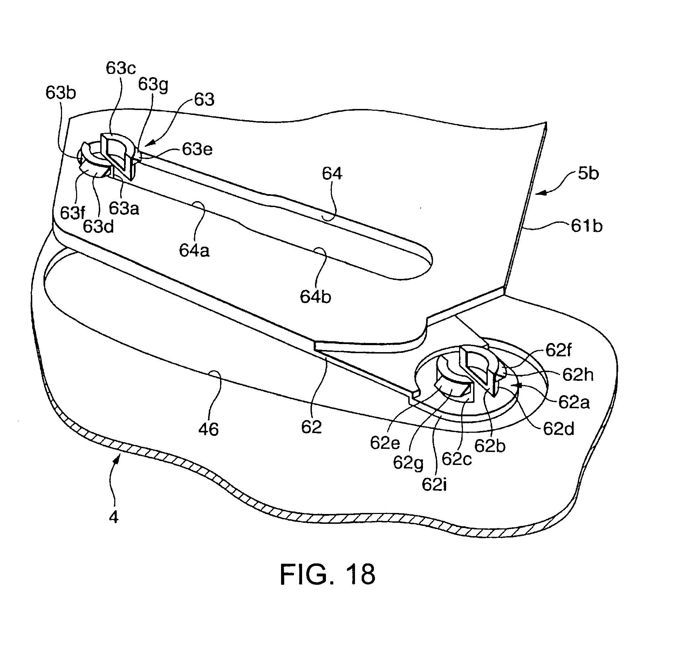

Further, as shown in Fig. 18, the second support shaft 62a is disposed to a seat portion 62i formed integrally with the second rotation support portion 62. The seat portion 62i is a reinforcing portion for reinforcing a portion in which the second support shaft 62a is disposed and formed thicker than the other portions. The seat portion 62i is formed to the rotation wheel 4 so as to be thicker than the other regions. Thus, an escape groove 46 is formed to the rotation wheel 4 to escape from the seat portion 62i.

Further, as shown in Fig. 13, a first cam portion 64 is formed to the second shutter portion 61 and composed of a groove with which a first control projection 63 formed to the rotation wheel 4 is engaged. The first control projection 63 is engaged with the first cam portion 64 to thereby control rotation of the second shutter plate 5b. The first cam portion 64 is composed of a narrowed width portion 64a on the outer periphery side of the rotation wheel 4 and an enlarged width portion 64b located near to the center of the rotation wheel 4 and having a width larger than the narrowed width portion 64a. The narrowed width portion 64a is a first acting portion for rotating the second shutter plate 5b during a former half period in which the second shutter plate 5b opens the first and second openings 24 and 44. The enlarged width portion 64b acts as a first non-acting portion which executes no action during a latter half period in which the first control projection 63 moves, that is, in which the second shutter plate 5b opens the first and second openings 24 and 44. Accordingly, the narrowed width portion 64a rotates the second shutter plate 5b during the former half period in which the second shutter plate 5b opens the first and second openings 24 and 44, and when the first control projection 63 is moved to the enlarged width portion 64b, the narrowed width portion 64a executes no action to the second shutter plate 5b.

Incidentally, the first control projection 63 also has an arrangement similar to the second support shaft 62a described above. That is, as shown in Fig. 18, the first control projection 63 is composed of elastic pieces 63b and 63c formed through a slit 63a, and further the elastic pieces 63b and 63c have locking portions 63d and 63e formed to the extreme ends thereof and expanding from the extreme ends. These locking portions 63d and 63e are arranged as guide portions 63f and 63g whose outer surfaces are composed of an R surface (curved surface) or a C surface (inclining surface). The locking portions 63d and 63e are formed such that at least the base ends thereof are wider than the narrowed width portion 64a of the first cam portion 64. The first control projection 63 is guided by the guide portions 63f and 63g and inserted into the first cam portion 64. At the time, the elastic pieces 63b and 63c are elastically displaced in a direction where they approach to each other to thereby permit the first control projection 63 to be inserted into the first cam portion 64, and when the locking portions 63d and 63e are inserted, the elastic pieces 63b and 63c are elastically restored. With this operation, the locking portions 63d and 63e are locked around the periphery of the first cam portion 64. As described above, the first control projection 63 is securely locked to the first cam portion 64 by the locking portions 63d and 63e so that it is not removed from the first cam portion 64 even by a shock due to drop and the like. Note that the number of the elastic pieces 63b and 63c is not limited to two, and three or more elastic pieces may be employed.

Note that when the first control projection 63 is formed of a resin material, the locking portions 63d and 63e may be formed by melting the extreme ends of the elastic pieces 63b and 63c by an ultrasonic wave or heat. Further, the first control projection 63 may be formed without being provided with the slit 63a, that is, without being divided and then may be provided with a locking portion by melting its extreme end with an ultrasonic wave or heat after it is inserted into the first cam portion 64.

Further, the locking portions 63d and 63e may be formed wider than the narrowed width portion 64a of the first cam portion 64 as described above. When the disc cartridge 1 is not used, the first control projection 63 is locked to the narrowed width portion 64a. When the disc cartridge 1 is dropped and a shock is applied thereto, the disc cartridge 1 is not used in the recording and/or replaying apparatus. More specifically, the time at which the shock is applied to the disc cartridge 1 is a time at which it is carried by a user and is not used without being mounted on the recording and/or replaying apparatus. Accordingly, it is sufficient for the locking portions 63d and 63e to be wider than the narrowed width portion 64a with which the first control projection 63 is engaged when the disc cartridge 1 is not used. It is needless to say that the locking portions 63d and 63e may be wider than the enlarged width portion 64b to make the first control projection 63 more unlike to be removed from the first cam portion 64.

Further, as shown in Fig. 13, a second control projection 66 is formed to the second shutter portion 61 and engaged with a second cam portion 65 composed of a groove formed on the main surface portion of the rotation wheel 4. The second cam portion 65 is composed of a first curved portion 65a and a second curved portion 65b. The first curved portion 65a is curved in a first direction on the center side of the rotation wheel 4, and the second curved portion 65b is curved in a second direction opposite to that of the first curved portion 65a on the outer periphery side of the rotation wheel 4. The first curved portion 65a is a second non-acting portion which executes no action during the former half period in which the second shutter plate 5b opens the first and second openings 24 and 44, and the second curved portion 65b is a second acting portion which executes an action during the latter half period in which the second shutter plate 5b opens the first and second openings 24 and 44. Accordingly, the first curved portion 65a executes no action during the former half period in which the second shutter plate 5b opens the first and second openings 24 and 44, and when second control projection 66 moves to the second curved portion 65b, that is, in the latter half period of rotation of the second shutter plate 5b, the second curved portion 65b rotates the second shutter plate 5b in place of the narrowed width portion 64a of the first cam portion 64 described above. As described above, when the second shutter plate 5b opens the first and second openings 24 and 44, the disc cartridge 1 prevents occurrence of dusts and the like due to wear by employing the acting portions separated from each other in the former half period and the latter half period.

Note that the first and second acting portions and the first and second non-acting portions may be composed of any combination of the enlarged width portion, the narrowed width portion and further the curved portion.

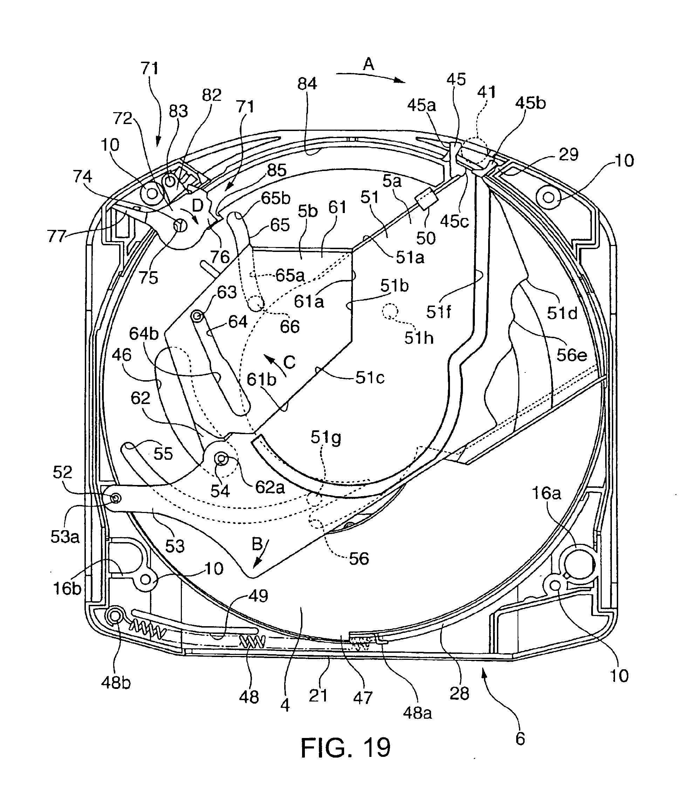

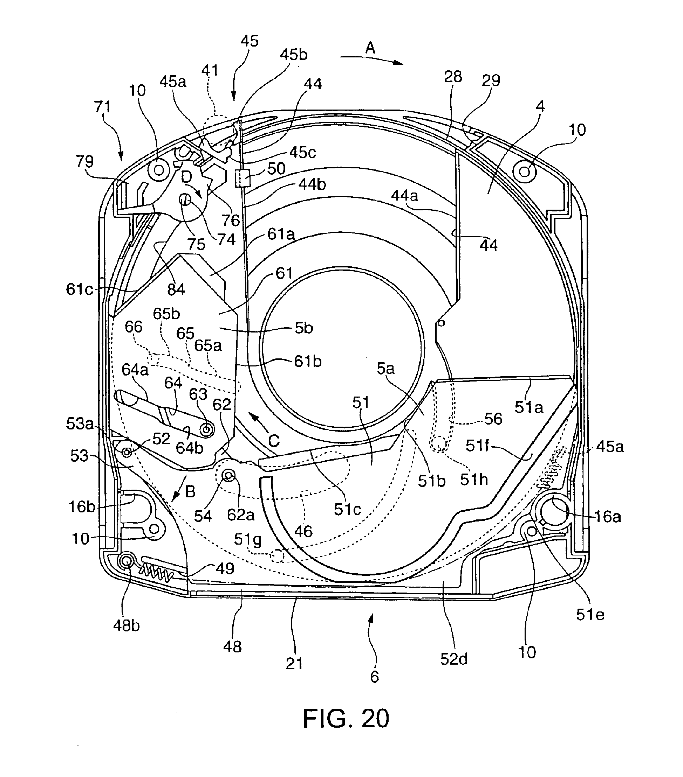

Next, rotation of the rotation wheel 4 and operation of the pair of first and second shutter plates 5a and 5b will be explained with reference to Figs. 19 and 20. Fig. 19 shows the state that the pair of first and second shutter plates 5a and 5b close the first and second openings 24 and 44. When the first and second shutter plates 5a and 5b close the first and second openings 24 and 44, the rotation wheel 4 is rotated and urged in the direction of an arrow A of Fig. 19 by the urging force of the urging member 48, and the to-be-actuated portion 45 is located at one side edge of the first opening 24. The second side edge portion 51b of the first shutter portion 51 is meshed with the taper portion of the first side edge portion 61a of the second shutter portion 61, and further the taper portion of the third side edge portion 51c of the first shutter portion 51 is meshed with the taper portion of the second side edge portion 61b of the second shutter portion 61 in an opposite direction, respectively, thereby dusts and the like are prevented from entering inward from the coupling portion as well as the first and second shutter plates 5a and 5b are made unlike to flex when they are pressed. Further, the first to third recesses 58a to 58c are engaged with the first to third projections 59a to 59c, thereby dusts and the like are prevented from entering inward from the coupling portion.

At the time, the guide projection 51g of the first shutter plate 5a is located at an end of the guide groove 55 of the rotation wheel 4 near to the center thereof. Further, the first control projection 63 is engaged with the narrowed width portion 64a, which acts as the first acting portion, of the first cam portion 64 of the second shutter plate 5b. Further, the second control projection 66 of the second shutter plate 5b is engaged with the first curved portion 65a, which acts as the second non-acting portion, of the second cam portion 65 of the rotation wheel 4.

When the rotation wheel 4 is rotated by the to-be-actuated portion 45 opposite to the arrow A in Fig. 19 against the urging fore of the urging member 48, the first shutter plate 5a whose guide projection 51g is engaged with the guide groove 55 of the rotation wheel 4 is rotated in the direction of an arrow B in Fig. 19 about the first support shaft 52 of the upper shell 6. As the first shutter plate 5a rotates, the second shutter plate 5b is rotated in the direction of an arrow C with respect to the first shutter plate 5a about the second support shaft 62a of the first shutter plate 5a. When the second shutter plate 5b begins to rotate, it is rotated by the narrowed width portion 64a which acts as the first acting portion of the first cam portion 64 and with which the first control projection 63 of the rotation wheel 4 is engaged. Note that when the second shutter plate 5b begins to rotate, the first curved portion 65a of the second cam portion 65 of the rotation wheel 4 with which the second control projection 66 of the second shutter plate 5b is engaged is the second non-acting portion and executes no action to rotate the shutter plate 5b.

Further, the when the rotation wheel 4 rotates opposite to the arrow A, the guide projection 51g engaged with guide groove 55 of the rotation wheel 4 is moved to the other end of the guide groove 55 on the outer periphery side of the rotation wheel 4. As the first shutter plate 5a rotates, the second shutter plate 5b is rotated in the direction of the arrow C in Fig. 19 with respect to the first shutter plate 5a about the second support shaft 62a of the first shutter plate 5a. Thus, the first control projection 63 of the rotation wheel 4 moves from the narrowed width portion 64a acting as the first acting portion to the enlarged width portion 64b of the first cam portion 64 acting as the first non-acting portion and executes no action to the second shutter plate 5b. In place of the first control projection 63, the second control projection 66 of the second shutter plate 5b moves from the first curved portion 65a acting as the second non-acting portion to the second curved portion 65b acting as the second acting portion and rotates the second shutter plate 5b in the direction of the arrow C. With this operation, as shown in Fig. 20, the first and second openings 24 and 44 are opened, thereby the optical disc 3 accommodated in the rotation wheel 4 can be located outside over the inner and outer peripheries thereof.

A positional relation between the second support shaft 62a acting as a fulcrum of rotation of the second shutter plate 5b and the first and second control projections 63 and 66 will be explained using Figs. 19 and 20. As the second shutter plate 5b rotates so as to open the first and second openings 24 and 44, the first control projection 63 approaches the second support shaft 62a acting as the fulcrum of rotation of the second shutter plate 5b. If it is intended to rotate the second shutter plate 5b using the enlarged width portion 64b, strong drive force is required because the support shaft 62a is located near to the first control projection 63. To cope with the above problem, in the latter half period of the rotating operation of the second shutter plate 5b, the first control projection 63 is not used, and the second control projection 66 is engaged with the second curved portion 65b acting as the second acting portion of the second cam portion 65 to thereby separate the position of the second support shaft 62a acting as the fulcrum of rotation of the second shutter plate 5b from the position of the second control projection 66 acting as a drive point so that the second shutter plate 5b can be rotated by weak drive force.

Incidentally, as shown in Figs. 19 and 20, the lock mechanism 71 is disposed in the cartridge main body 2 to maintain the state that the first and second shutter plates 5a and 5b close the first and second openings 24 and 44 by regulating the rotation of the rotation wheel 4. Specifically, as shown in Figs. 19, 20, and 21, the lock mechanism 71 has the lock member 72 for locking the rotation wheel 4. The lock member 72 has a base body portion 73, and a shaft hole 75, into which a support shaft 74 formed to the inner surface of the lower shell 7 is inserted, is formed to the base body portion 73. Further, a lock portion 76, the lock release piece 77, a rotation regulation piece 78, and a lock piece 79 are formed to the base body portion 73. The lock portion 76 locks the rotation of the rotation wheel 4, the lock release piece 77 is pressed by the insertion guide pin 88 also acting as the lock release pin of the recording and/or replaying apparatus, the rotation regulation piece 78 regulates rotation of the base body portion 73, and an end of an urging member 82 is locked to the lock piece 79. The lock member 72 is disposed in the vicinity of the insertion guide groove 25b on the side of the alignment hole 26b formed on the back surface of the lower shell 7. The lock member 72 is attached to the lower shell 7 by fitting the shaft hole 75 on the support shaft 74 of the lower shell 7.

Note that when the lock member 72 is attached to the support shaft 74, the extreme end of the support shaft 74 also projects from the base body portion 73. The extreme end of the projecting support shaft 74 is engaged with a shaft receiver 86 disposed to the upper shell 6 and prevents the lock member 72 from being removed from the support shaft 74 even if a shock due to drop and the like is applied thereto, that is, strength of the support shaft 74 is reinforced.

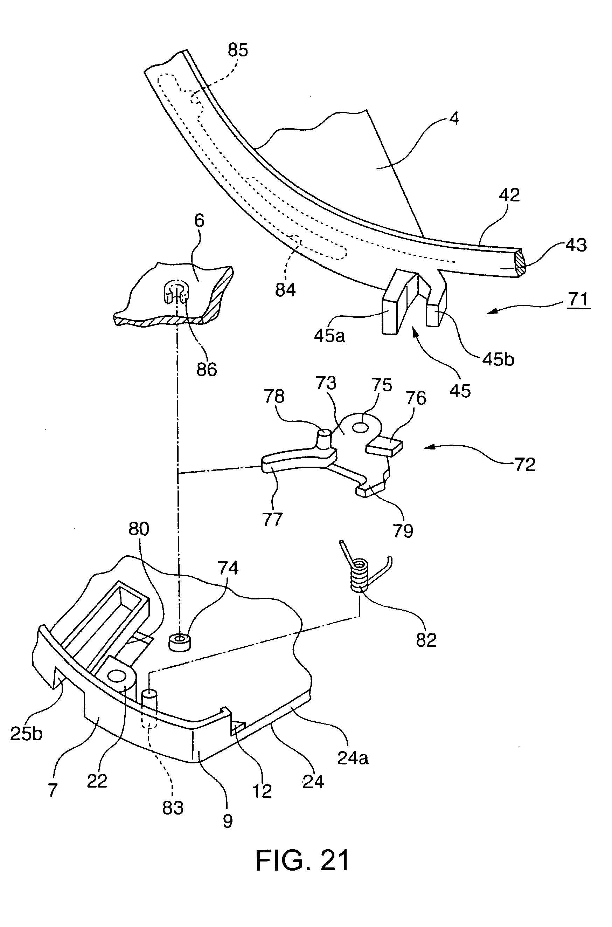

As shown in Fig. 21, the lock portion 76 of the lock member 72 faces inward, and the lock release piece 77 is located in the insertion guide groove 25b from an escape hole 80 formed to a standing wall constituting the insertion guide groove 25b. Further, the rotation regulation piece 78 is abutted against the boss 22 continuous to the standing wall to thereby regulate rotation of the lock member 72.

An attachment pin 83 is formed in the vicinity of the support shaft 74 to which the lock member 72 is attached, and an urging member 82 such as a twisted coil spring and the like is attached to the attachment pin 83 to urge the lock member 72 in one direction. A coil portion of the urging member 82 is wound around the attachment pin 83. One arm portion of the urging member 82 attached to the urging member 82 is locked to the boss 22, the other end thereof is locked to the lock piece 79 of the lock member, and the urging member 82 urges the lock member 72 in the direction of an arrow D in Fig. 19 where the lock member 72 is placed in a locked state so that the lock release piece 77 is located at the opening end of the insertion guide groove 25b.

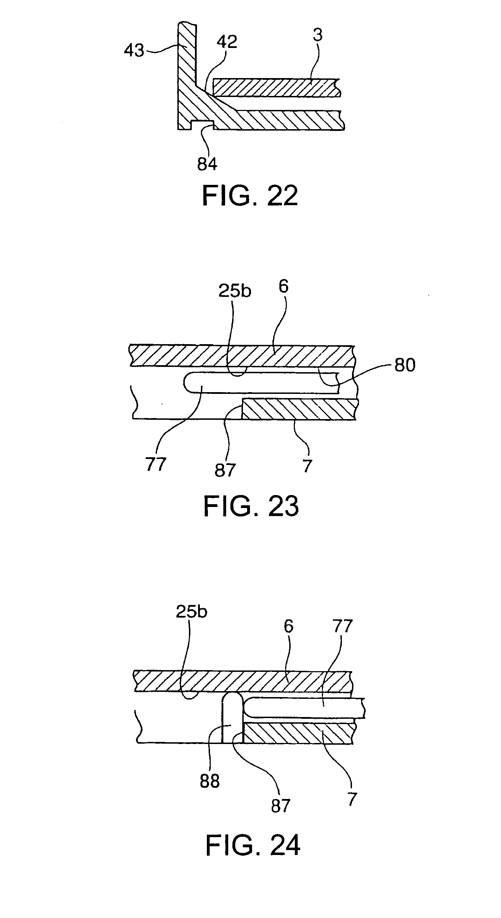

The lock portion 76 of the base body portion 73 is located slightly inside of the outer periphery of the rotation wheel 4. A lock groove 84 is formed to the rotation wheel 4 slightly inside of the outer periphery thereof, and the lock portion 76 projecting from the base body portion 73 is engaged with the lock groove 84. The lock groove 84 has a locking recess 85 formed to the inside thereof. Since the upper side of the locking recess 85 is formed of an approximately vertical wall, when the rotation wheel 4 tends to be rotated opposite to the arrow A in Fig. 19, the locking recess 85 confronts a vertical wall of the lock portion 76 and is securely engaged with the lock portion 76. The lock portion 76 is engaged with the locking recess 85 to thereby lock the rotation of the rotation wheel 4. As shown in Fig. 22, the lock groove 84 is formed on the surface of the rotation wheel 4 on which the optical disc 3 is accommodated below the taper portion 42 formed to the base end portion of the ring portion 43 to support the outer peripheral edge of the optical disc 3 so that the lock groove 84 has no unnecessary wall thick portion.

Note that the lock member 72 is formed of an elastic material excellent in slidability so that it has a small friction resistance against the lower shell 7 and the support shaft 74.

When the state, in which the first and second shutter plates 5a and 5b close the first and second openings 24 and 44, is explained using Fig. 19, the lock member 72 is urged by the urging force of the urging member 82 in the direction of an arrow D in Fig. 19 about the support shaft 74. At the time, the lock portion 76 is engaged with the locking recess 85 of the lock groove 84 formed inside thereof. Accordingly, rotation of the rotation wheel 4 is prohibited by the lock portion 76 engaged with the locking recess 85. At the time, even if force for, for example, forcibly rotating the rotation wheel 4 opposite to the arrow D is applied, force is applied to the lock portion 76 in the direction of the arrow D to cause the lock portion 76 to advance to the locking recess 85. Accordingly, the lock member 72 can securely lock the rotation of the rotation wheel 4.

Further, as shown in Fig. 23, the lock release piece 77 is located at the front surface opening end in the insertion guide groove 25b from the escape hole 80, thereby the insertion guide pin 88, which acts as the lock release pin of the recording and/or replaying apparatus, can be pressed. Specifically, the bottom surface of the insertion guide groove 25b is opened on the front surface side thereof. The lock release piece 77 is located nearer to the front surface end than the end surface 87 of the bottom surface of the insertion guide groove 25b, thereby the insertion guide pin 88, which acts as the lock release pin of the recording and/or replaying apparatus, can be pressed. Since the lock release piece 77 is located in the insertion guide groove 25b, a malfunction can be prevented.

When the disc cartridge 1 is inserted into the recording and/or replaying apparatus, the lock release pin enters the insertion guide groove 25b as shown in Fig. 24. When the insertion guide pin 88, which acts as the lock release pin of the recording and/or replaying apparatus, enters the insertion guide groove 25b from the front surface opening end, first, the insertion guide pin 88 presses the lock release piece 77 and then is abutted against the end surface 87 of the bottom surface acting as a regulating portion for regulating the inserting position of the insertion guide pin 88. At the same time, the insertion guide pin 88 enters also the insertion guide groove 25a. The lock release piece 77 is pressed by the insertion guide pin 88 until the insertion guide pin 88 is abutted against the end surface 87 acting as the regulating portion. Thus, as shown in Fig. 19, the lock member 72 is rotated opposite to the arrow D in Fig. 19 about the support shaft 74 against the urging force of the urging member 82. Accordingly, the locking recess 85 is disengaged from the locking recess 85 in the lock groove 84 and moved in the lock groove 84 as the rotation wheel 4 rotates.

Before the disc cartridge 1 arranged as described above is mounted on the recording and/or replaying apparatus, it is in the state shown in Figs. 1, 2, and 19. That is, when the pair of the first and second shutter plates 5a and 5b close the first and second openings 24 and 44, the rotation wheel 4 is rotated and urged in the direction of the arrow D in Fig. 19 by the urging force of the urging member 48, and the first opening 24 of the lower shell 7 disagrees with the second opening 44 of the rotation wheel 4. Further, the to-be-actuated portion 45 is located at one side edge of the first opening 24. As shown in Fig. 11, the engagement groove 45c of the to-be-actuated portion 45 prevents the first shutter plate 5a from floating up and down together with the engagement groove 50 formed in the vicinity of the second opening 44 of the rotation wheel 4. Further, the second side edge portion 51b of the first shutter portion 51 is meshed with the taper portion of the first side edge portion 61a of the second shutter portion 61 and further the taper portion of the third side edge portion 51c of the first shutter portion 51 is meshed with the taper portion of the second side edge portion 61b of the second shutter portion 61 in an opposite direction, respectively. That is, the disc cartridge 1 is made unlike to flex and to deform by the first and second shutter plates 5a and 5b meshed with each other as well as the floating up of the first shutter plate 5a is prevented, thereby foreign matters such as dusts and the like are prevented from entering the cartridge main body 2. Further, the first to third recesses 58a to 58c and the first to third projections 59a to 59c are engaged with each other, thereby dusts and the like are prevented from entering inward from the coupling portion.

At the time, the guide projection 51g of the first shutter plate 5a is located at an end of the guide groove 55 of the rotation wheel 4 near to the center thereof. In the first cam portion 64 of the second shutter plate 5b, the first control projection 63 is engaged with the narrowed width portion 64a acting as the first acting portion. Further, the second control projection 66 of the second shutter plate 5b is engaged with the first curved portion 65a acting as the second non-acting portion of the second cam portion 65 of the rotation wheel 4. With this arrangement, in the disc cartridge 1, the first opening 24 of the lower shell 7 is closed as shown in Fig. 2. Even if the first shutter plate 5a is pressed, since the regulation projection 51h of the first shutter plate 5a is abutted against the inner periphery side non-signal recording region of the optical disc 3 and the first shutter portion 51 is not in contact with the signal recording region of the optical disc 3, the signal recording region can be prevented from being scratched.

When the first and second shutter plates 5a and 5b close the first and second openings 24 and 44, the rotation wheel 4 is lifted to the lower shell 7 side by the lifter 14 of the upper shell 6, and the projection 27 formed to the peripheral edge of the first opening 24 is engaged with the groove portion 51 of the first shutter portion 51, thereby dusts and the like are prevented from entering the cartridge main body 2.

To explain the lock mechanism 71, as shown in Fig. 19, the lock member 72 is urged in the direction of the arrow D in Fig. 19 about the support shaft 74 by the urging force of the urging member 82. At the time, the lock portion 76 is engaged with the locking recess 85 of the lock groove 84. Accordingly, the rotation of the rotation wheel 4 is prohibited by the lock portion 76 engaged with the locking recess 85. Even if force for, for example, forcibly rotating the rotation wheel 4 opposite to the arrow D is applied, force is applied to the lock portion 76 in the direction of the arrow D to cause the lock portion 76 to advance to the locking recess 85. Accordingly, the lock member 72 can securely lock the rotation of the rotation wheel 4.

Further, as shown in Fig. 23, the lock release piece 77 is located at the front surface opening end in the insertion guide groove 25b from the escape hole 80, thereby the insertion guide pin 88 acting as the lock release pin on the recording and/or replaying apparatus can be pressed. Specifically, the bottom surface of the insertion guide groove 25b is opened on the front surface side thereof. The lock release piece 77 is located nearer to the front surface end than the end surface 87 of the bottom surface of the insertion guide groove 25b, thereby the insertion guide pin 88, which acts as the lock release pin of the recording and/or replaying apparatus, can be pressed.

When the disc cartridge 1 is not used as described above, the user may drop the disc cartridge 1 by mistake when he or she inserts it into the recording and/or replaying apparatus or when he or she carries it. Even if a shock due to drop is applied to the disc cartridge 1, the first and second shutter plates 5a and 5b can prevent the second support shaft 62a from being removed from the second shaft hole 54 because the locking portions 62e and 62f disposed to the second support shaft 62a are locked to the second shaft hole 54 as shown in Fig. 15. Further, since the locking portions 63d and 63e are locked to the first cam portion 64, the first control projection 63 can also prevent the first control projection 63 from being removed from the first cam portion 64. Furthermore, strength of the second support shaft 62a is reinforced by the seat portion 62i. Accordingly, even if the disc cartridge 1 is dropped by mistake and a shock is applied thereto, such failures that the first and second shutter plates 5a and 5b cannot be opened, a gap is formed therebetween, and they are damaged can be prevented.

The disc cartridge 1 arranged as described above is inserted into the recording and/or replaying apparatus using the front surface thereof formed in an approximately arc shape as its insertion end. When the disc cartridge 1 is inserted into the recording and/or replaying apparatus, first, the pair of insertion guide pins 88 formed to the mounting portion of the recording and/or replaying apparatus are inserted. Since the opening ends of the insertion guide grooves 25a and 25b are formed widest as shown in Fig. 7, they can securely guide the disc cartridge 1 to a predetermined position of the mounting portion. Further, when the width of the deepest portions of the insertion guide grooves 25a and 25b is set approximately the same as the thickness of the insertion guide pins, the disc cartridge 1 can be accurately mounted at a predetermined position of the mounting portion of the recording and/or replaying apparatus by the insertion guide pins 88.

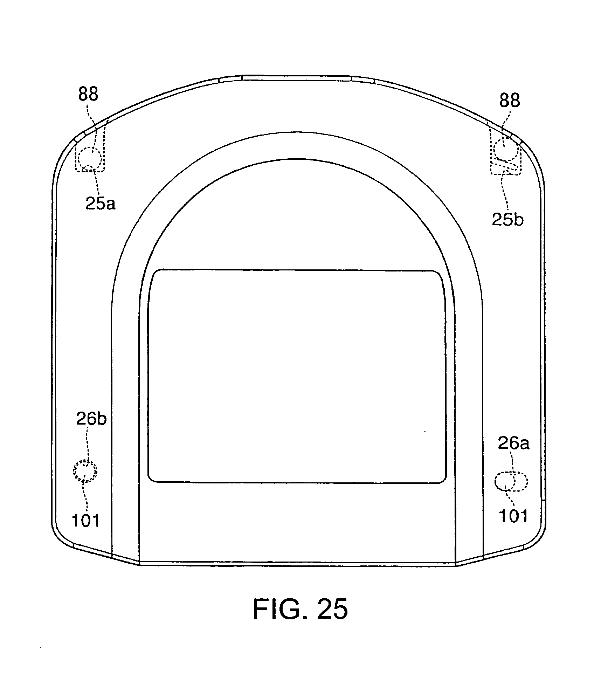

As shown in Fig. 25, when the disc cartridge 1 is mounted on the mounting portion of the recording and/or replaying apparatus, the insertion guide pins 88 are engaged with the location hole 26a and the alignment hole 26b. The location hole 26a is a reference hole when the disc cartridge 1 is mounted, the alignment hole 26b is an adjustment hole. When the disc cartridge 1 is inserted into the recording and/or replaying apparatus, the lock release piece 77 of the lock member 72 must be pressed against the urging force of the urging member 82. Accordingly, the lock release piece 77 is disposed to the insertion guide groove 25b on the adjustment alignment hole 26b side so that positioning can be more accurately executed in the mounting portion.

When the disc cartridge 1 is mounted on the mounting portion, the lock release pin acting as the insertion guide pin 88 enters the insertion guide groove 25b from the front surface opening end and presses the lock release piece 77 first and then is abutted against the end surface 87 of the bottom surface. The lock release piece 77 is pressed by the insertion guide pin 88 acting as the lock release pin until the lock release pin is abutted against the end surface 87. Thus, as shown in Fig. 19, the lock member 72 is rotated opposite to the arrow D in Fig. 19 about the support shaft 74 against the urging force of the urging member 82. Accordingly, the lock portion 76 is disengaged from the locking recess 85 in the lock groove 84, thereby the rotation wheel 4 is made free to rotate.

When the disc cartridge 1 is mounted on the mounting portion of the recording and/or replaying apparatus, the rotation wheel 4 is rotated by the to-be-actuated portion 45 opposite to the direction of the arrow A in Fig. 19 against the urging fore of the urging member 48, the first shutter plate 5a whose guide projection 51g is engaged with the guide groove 55 of the rotation wheel 4 is rotated in the direction of the arrow B in Fig. 19 about the first support shaft 52 of the upper shell 6. As the first shutter plate 5a rotates, the second shutter plate 5b is rotated about the second support shaft 62a of the first shutter plate 5a in the direction of the arrow C in Fig. 19 with respect to the first shutter plate 5a. When the second shutter plate 5b begins to rotate, it is rotated by the narrowed width portion 64a of the first cam portion 64 which acts as the first acting portion and with which the first control projection 63 of the rotation wheel 4 is engaged. Note that when the second shutter plate 5b begins to rotate, the first curved portion 65a of the second cam portion 65 of the rotation wheel 4 with which the second control projection 66 of the second shutter plate 5b is engaged acts as the second non-acting portion and executes no action to the second shutter plate 5b to rotate it.

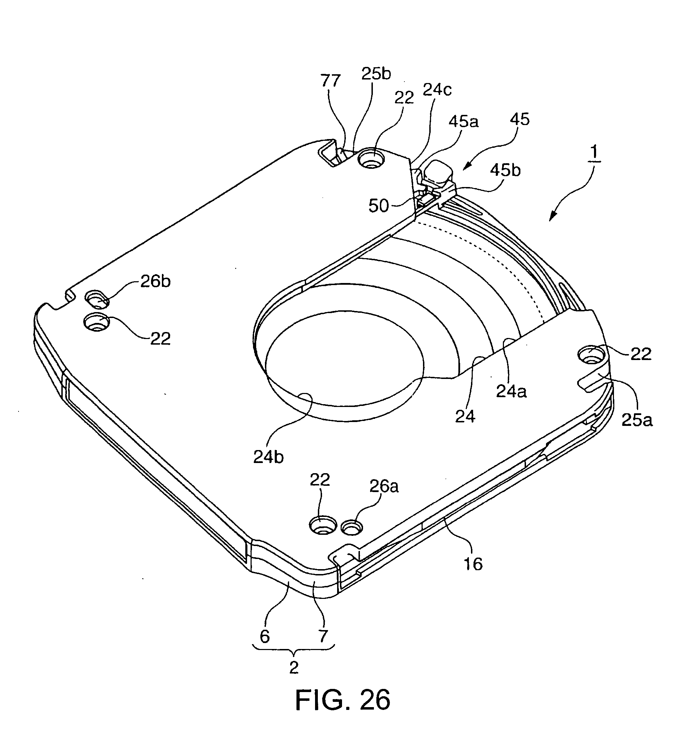

Further, the when the rotation wheel 4 rotates opposite to the direction of the arrow A in Fig. 20, the guide projection 51g engaged with guide groove 55 of the rotation wheel 4 is moved to the other end of the guide groove 55 on the outer periphery side of the rotation wheel 4 as shown in Fig. 20. As the first shutter plate 5a rotates, the second shutter plate 5b is rotated about the second support shaft 62a of the first shutter plate 5a in the direction of an arrow B in Fig. 20 with respect to the first shutter plate 5a. Thus, the first control projection 63 of the rotation wheel 4 is moved from the narrowed width portion 64a acting as the first acting portion of the first cam portion 64 to the enlarged width portion 64b acting as the first non-acting portion and executes no action to the second shutter plate 5b. In place of the first control projection 63, the second control projection 66 of the second shutter plate 5b is moved from the first curved portion 65a acting as the second non-acting portion to the second curved portion 65b acting as the second acting portion and rotates the second shutter plate 5b in the direction of an arrow C in Fig. 20. With this operation, the to-be-actuated portion 45 is located in a portion whose width is enlarged by the taper portion 24c of the first opening 24, the first and second openings 24 and 44 are opened as shown in Fig. 26, thereby the optical disc 3 accommodated in the rotation wheel 4 can be located outside over the inner and outer peripheries thereof.

In the latter half of the rotating operation, the second shutter plate 5b can be rotated by weak drive force by engaging the second control projection 66 apart from the second support shaft 62a with the second curved portion 65b acting as the second acting portion of the second cam portion 65 without using the first control projection 63 approaching the second support shaft 62a acting as the fulcrum of rotation of the second shutter plate 5b. Further, the acting portions separated from each other are used during the former half period and the latter half period, respectively when the first and second shutter plates 5a and 5b are rotated. As a result, dusts such as worn powder and the like resulting from the rotation of the first and second shutter plates 5a and 5b can be prevented from being made in the cartridge main body 2.

The center hole 3a of the optical disc 3 rotatably accommodated in the rotation wheel 4 is engaged with the disc table of the disc rotation drive mechanism of the recording and/or replaying apparatus as well as the optical disc 3 is clamped between the clamping plate 13 disposed to the upper shell 6 and the disc table, thereby the optical disc 3 can be rotated by the disc table.

When an information signal is recorded on the optical disc 3 or when an information signal recorded on the optical disc 3 is replayed, the optical disc 3 is rotated by the disc table at CLV (constant linear velocity), CAV (constant angular velocity), or at a velocity obtained by combining them. At the same time, an optical beam with a wavelength of about 400 nm, which is emitted from a semiconductor laser to the signal recording region of the optical disc 3, is converged by an objective lens and irradiated onto the signal recording surface of the optical disc 3. Then, an optical pickup entering the first and second openings 24 and 44 detects the optical beam reflected and returned from the signal recording surface and records an information signal on the optical disc 3 or reads out an information signal recorded on the optical disc 3.

Note that when the disc cartridge 1 is discharged from the recording and/or replaying apparatus, the rotation wheel 4 is rotated in the direction of an arrow A in Fig. 20 and returned to the state of Fig. 19 from the state of Fig. 20. The lock portion 76 of the lock member 72 is moved in the lock groove 84 and engaged with the locking recess 85, thereby the first and second openings 24 and 44 are returned to a closed state.

Next, another example of the disc cartridge to which the present invention is applied will be explained with reference to the drawings. The disc cartridge to which the present invention is applied is a small disc cartridge which can be also mounted on a recording and/or replaying apparatus employing the standard size disc cartridge disclosed in Japanese Unexamined Patent Application Publication No. 2003-109343. The disc cartridge disclosed in Japanese Unexamined Patent Application Publication No. 2003-109343 uses an optical disc having a diameter of about 12 cm as a recording medium, whereas the disc cartridge, to which the present invention is applied, uses an optical disc having a diameter smaller than the optical disc of the standard size disc cartridge. Since the disc cartridge, to which the present invention is applied, is formed in a small size and uses the optical disc whose diameter is smaller than the disc cartridge disclosed in Japanese Unexamined Patent Application Publication No. 2003-109343, it is excellent in portability although the recording capacity thereof is smaller than the standard size disc cartridge.

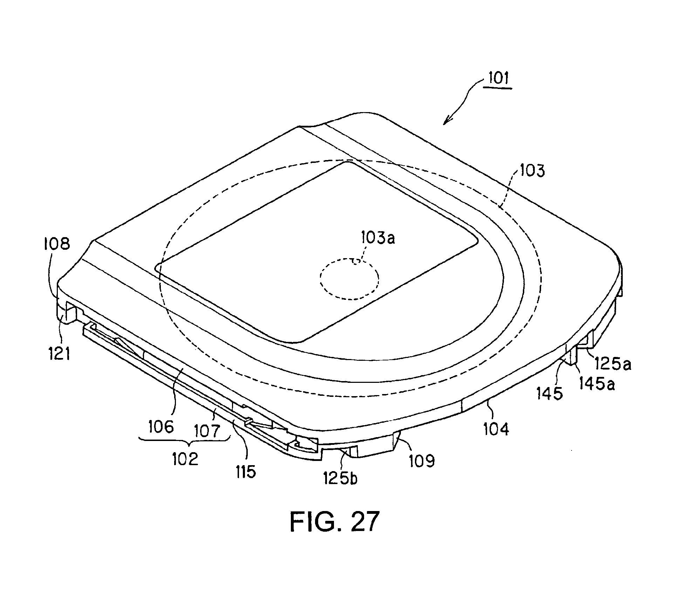

As shown in Figs. 27 to 29, the disc cartridge 101, to which the present invention is applied, accommodates a rotation wheel 104 and a pair of first and second shutter plates 105a and 105b acting as a shutter mechanism in a cartridge main body 102, and an optical disc 103 is accommodated in the rotation wheel 104. The cartridge main body 102 is composed by abutting a set of an upper shell 106 and a lower shell 107, which are to be combined with each other, against each other.

The optical disc 103 used in the disc cartridge 101 has a center hole 103a formed at a center, and a disc rotation drive mechanism of a recording and/or replaying apparatus is engaged with the center hole 103a. Note that the optical disc 103 may be a replay only optical disc having a pit pattern formed on a disc substrate in correspondence to an information signal to be recorded, a rewritable optical disc using a phase change material in a recording layer, or further a write once optical disc using an organic pigment material and the like in a recording layer. Further, a magneto-optic disc, a magnetic disc, and the like may be used as a recording medium to be used, in addition to the optical disc, and further a cleaning disc may be used.

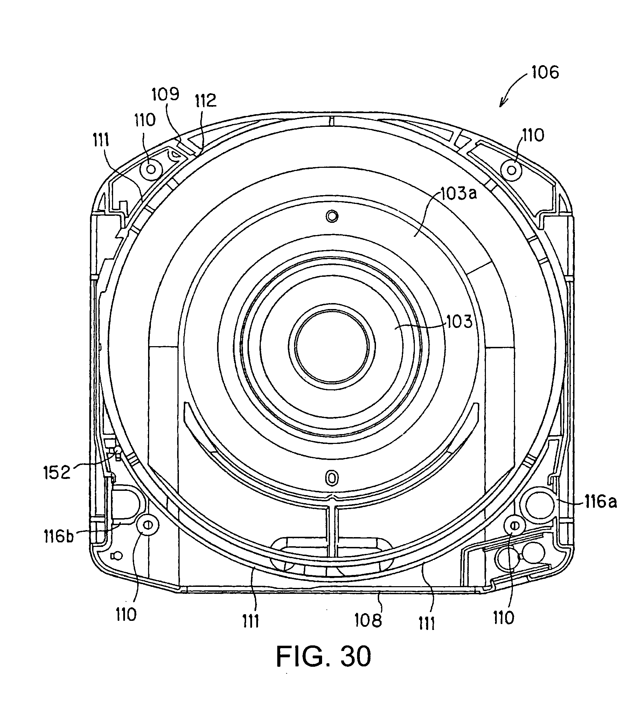

As shown in Fig. 30, the upper shell 106 constituting the cartridge main body 102 is formed by injection molding a resin material. A main surface of the upper shell 106 is formed in an approximately rectangular-shape in its entirety, and a front surface, which acts as an insertion end side to the recording and/or replaying apparatus, of the main surface is formed in an approximately arc shape. Further, an outer peripheral wall 108, which forms a side surface of the cartridge main body 102, is standingly formed around the outer peripheral edge of the main surface of the upper shell 106.

A first pick-up entering recess 109 is formed to the outer peripheral wall 108 at the center of a front surface so that an optical pick-up of the recording and/or replaying apparatus enters it. Further, a plurality of bosses 110, in which screw holes are formed, are formed in the vicinities of the respective corners of the outer peripheral wall 108 to couple the lower shell 107 through the screw holes.

An approximately annular inner peripheral wall 111 is formed to the inner periphery of the outer peripheral wall 108 so as to inscribe it, and the rotation wheel 104 is rotatably accommodated in the inner peripheral wall 111. A second pick-up entering recess 112 is formed to the inner peripheral wall 111 at the center of the front surface thereof so that the optical pick-up of the recording and/or replaying apparatus enters it. The inner peripheral wall 111 rotatably accommodates the rotation wheel 104 therein and acts as a guide wall when the rotation wheel 104 is rotated. When the rotation wheel 104 is accommodated, the main surface portion of the upper shell 106 constitutes a disc accommodating section together with the rotation wheel 104.

A clamping plate 113 is attached to approximately the center of the inner surface of the upper shell 106 to clamp the optical disc 103 together with a disc table constituting a disc rotation drive unit of the recording and/or replaying apparatus. The clamping plate 113 is attached by an attachment ring 113a. Specifically, the clamping plate 113 is attached in such a manner that it is clamped between the attachment ring 113a and approximately the center of the inner surface of the upper shell 106, and the attachment ring 113a is fixed to approximately the center of the inner surface of the upper shell 106 by welding and the like. The optical disc 103 can be rotated freely in a disc accommodation section in such an arrangement that the disc table is engaged with the center hole 3a and further the optical disc 3 is clamped between the disc table and the clamping plate 13.

Note that a standing wall 116a constituting a location hole 126a of the lower shell 107 and a standing wall 116b constituting an alignment hole 126b, which will be described later, are further formed to the inner surface of the upper shell 106.

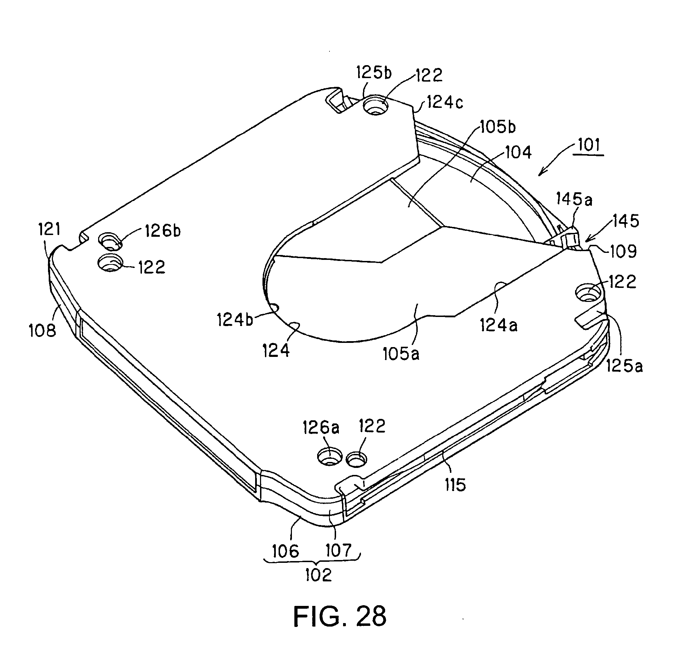

As shown in Figs. 28, 29, and 31, the lower shell 107, which is coupled with the upper shell 106 arranged as described above, is formed by injection molding a resin material likewise the upper shell 106 described above. The lower shell 107 has an approximately rectangular-shaped main surface in its entirety, and a front surface, which is inserted into the recording and/or replaying apparatus, of the main surface, is formed in an approximately arc shape. An outer peripheral wall 121 forming a side surface of the cartridge main body 102 is standingly formed around the outer peripheral edge of the main surface, and further an inner peripheral wall 128 is formed to inscribe the outer peripheral wall 121.

A first opening 124 is formed by opening the central portion of the front surface of the outer peripheral wall 121 such that the optical pick-up and the disc table can enter therein. The first opening 124 is composed of an approximately rectangular optical pick-up opening 124a and a rotation drive opening 124b. The optical pick-up opening 124a locates a part of a signal recording surface of the optical disc 103 outside over the inner and outer peripheries thereof from an open end of the front side of the first opening 124 and the rotation drive opening 124b locates the center hole 103a of the optical disc 103, which is formed continuously to the optical pick-up opening 124a, outside. The optical pick-up opening 124a is formed to a size sufficient to cause the optical pick-up of the recording and/or replaying apparatus to enter into the cartridge main body 102, and the rotation drive opening 124b is formed to a size sufficient to cause the disc table, which constitutes a disc rotation drive mechanism of the recording and/or replaying apparatus, to enter into the cartridge main body 102. Further, a taper portion 124c is formed to one of the opening ends of the optical pick-up opening 24b so as to incline in a direction where the opening end is widened. The taper portion 124c is a portion in which a to-be-actuated portion 145 of the rotation wheel 104, which will be described later, is accommodated when the to-be-actuated portion 145 is located at a position where the first and second shutter plates 105a, 105b open the first opening 124.

A plurality of projections 127 are formed to one of the side edge portions of the recording/replaying opening 124a and to one of the side edges of the rotation drive opening 124b each constituting the first opening 124 to prevent dusts and the like from entering the cartridge main body 102 when the pair of first and second shutter plates 105a and 105b close the first and second openings 124.

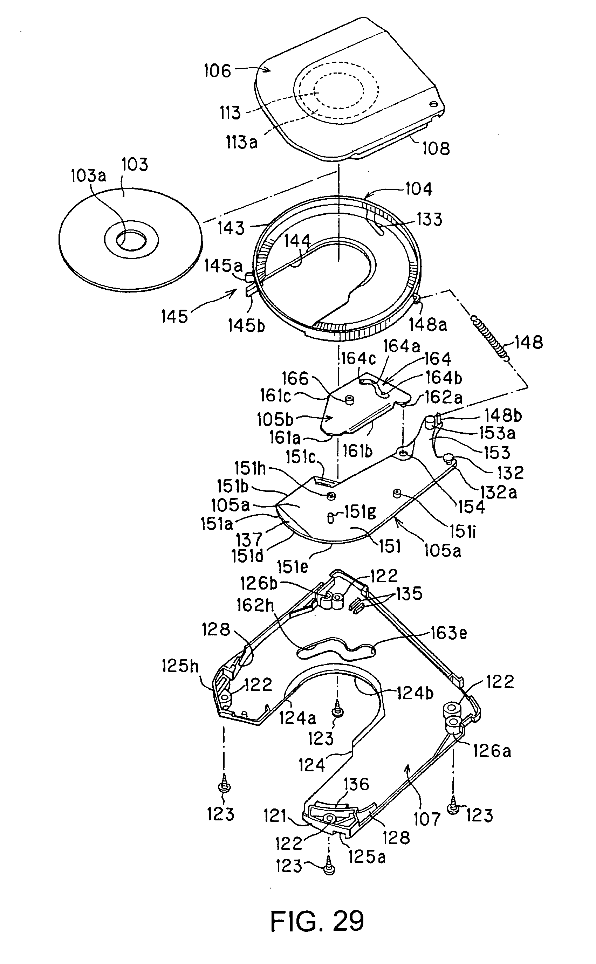

Further, bosses 122, in which through holes are formed, are formed on the back surface of the outer peripheral wall 121 so as to be abutted against the bosses 110, in which the screw holes are formed, of the upper shell 106. As shown in Figs. 28 and 29, the upper shell 106 is coupled with the lower shell 107 by inserting screws 123 from the through holes of the bosses 122 of the lower shell 107 and screwing them into the screw holes of the bosses 110 of the upper shell 106.

Further, insertion guide grooves 125a and 125b are formed on the front surface of the lower shell 107 on both the sides thereof, and when the disc cartridge 101 is inserted into the recording and/or replaying apparatus, insertion guide members of the recording and/or replaying apparatus are engaged with the insertion guide grooves 125a, 125b. The guide grooves 125a, 125b are formed widest at the front surface opening ends thereof so that the insertion guide pins can enter them easily.

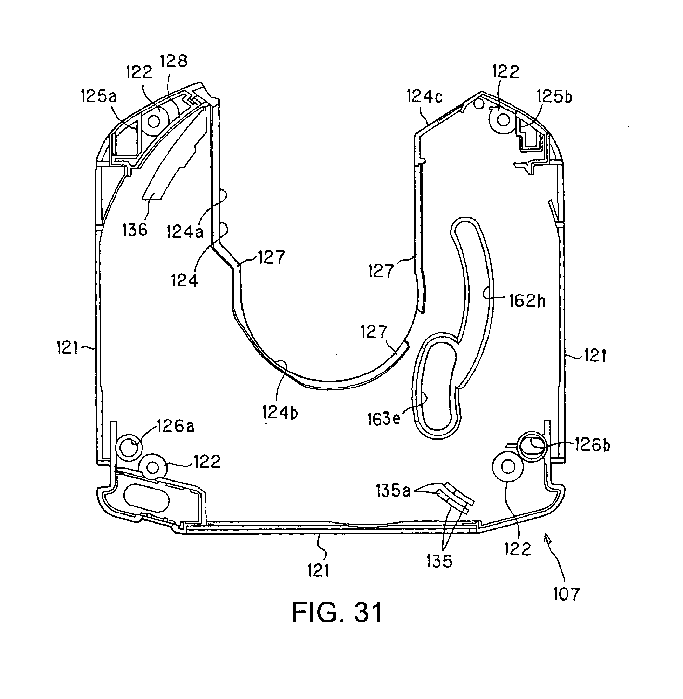

Further, as shown in Figs. 28 and 31, the location hole 126a is formed in the vicinity of one of the corners of the lower shell 107 on the back surface thereof and acts as a reference hole for positioning and mounting the disc cartridge 101 to and on the recording and/or replaying apparatus. Further, the adjustment alignment hole 126b is formed in the vicinity of the other corner.

Note that, as shown in Figs. 27 and 28, guide grooves 115 for guiding the cartridge main body 102, when it is inserted into the recording and/or replaying apparatus, are formed on both the side surface portions of the cartridge main body 102 composed of the upper shell 106 and the lower shell 107 abutted against each other, the side surface portions being in parallel with a direction where the cartridge main body 102 is inserted into the recording and/or replaying apparatus.

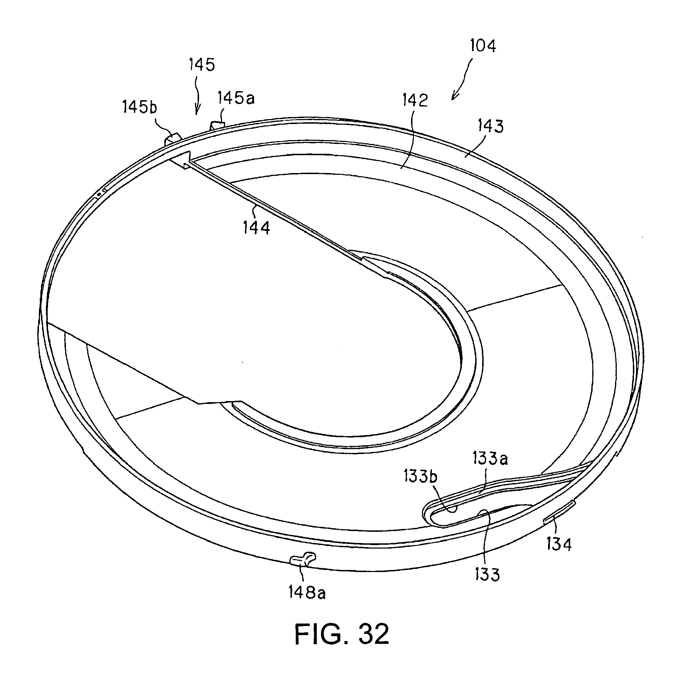

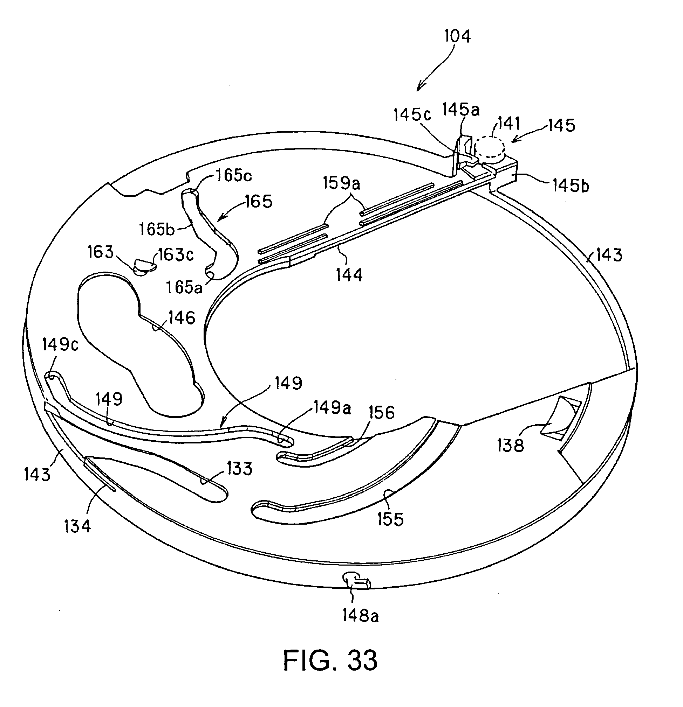

When the upper shell 106 is abutted against the lower shell 107, an accommodating section, in which the rotation wheel 104 is accommodated, is formed inside of the inner peripheral wall 111. As shown in Figs. 32 and 33, the rotation wheel 104 accommodated in the accommodating section is formed by injection molding a resin material. A main surface of the rotation wheel 104 is formed in an approximately plate shape, and when a recessed side thereof is disposed in the cartridge main body 102, the disc accommodating section is formed by the upper shell 106 and a main surface of one of the first and second shutter plates 105a and 105b. The rotation wheel 104 is formed in an approximately circular shape, and a ring portion 143 is standingly formed around the outer peripheral edge thereof. A second opening 144, which is approximately as large as the first opening 124 formed to the lower shell 107, is formed to the main surface of the rotation wheel 104.

When the second opening 144 agrees with the first opening 124 of the lower shell 107, the accommodated optical disc 103 is located outside. That is, the second opening 144 is composed of an opening corresponding to the optical pick-up opening 124a of the first opening 124 and an opening corresponding to the rotation drive opening 124b thereof. Further, the second opening 144 is formed so as to be gradually widened from a center to an outer periphery to absorb an error between the it and the first opening 124 so that the first opening 124 is not reduced in size due to a manufacturing error and a mounting error of the rotation wheel 104. For example, the second opening 144 is formed such that both the side edges or one of them inclines about 1° outward.

Further, a taper portion 142 inclining to the main surface portion is formed to the base end portion of the ring portion 143. The taper portion 142 supports the outer peripheral edge of the optical disc 1033 in edge contact therewith, and the signal recording surface of the optical disc 103 is in surface contact with the main surface of the rotation wheel 104, thereby the signal recording surface is not scratched.

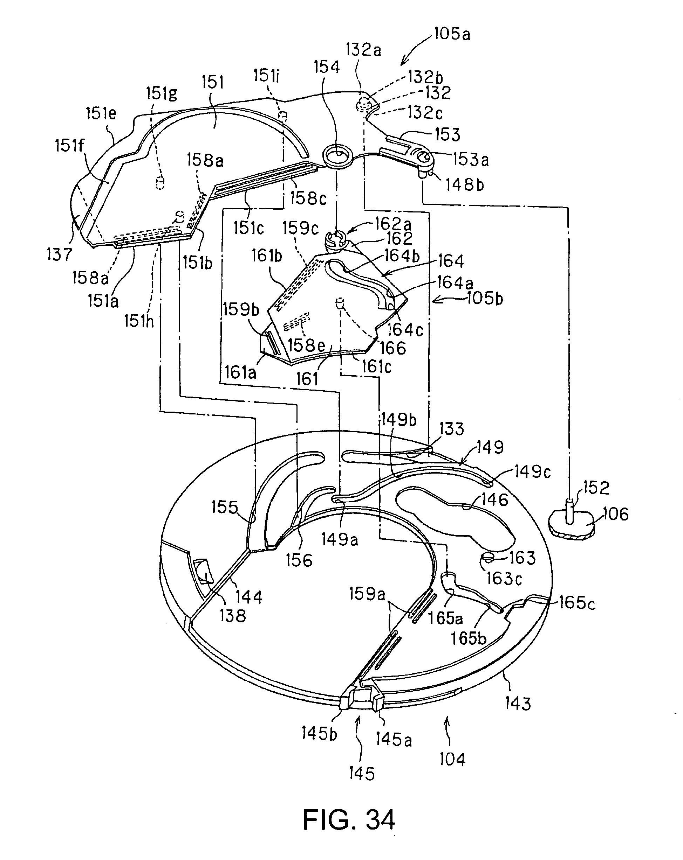

As shown in Figs. 33 and 34, the to-be-actuated portion 145 is formed in the vicinity of the second opening 144 of the rotation wheel 104 and projects outside, and a shutter open pin 141 constituting a shutter open mechanism of the recording and/or replaying apparatus is engaged with the to-be-actuated portion 145. The to-be-actuated portion 145 has a first to-be-actuated piece 145a and a second to-be-actuated piece 145b, which open the recording and/or replaying apparatus side of the to-be-actuated portion 45 and form a recess, and the shutter open pin 141 of the recording and/or replaying apparatus is engaged with the recess. The first to-be-actuated piece 145a is a piece against which the shutter open pin 141 is abutted when the rotation wheel 104 is rotated in a direction where the first and second shutter plates 105a and 105b open the first and second openings 124 and 144. Whereas, the second to-be-actuated piece 145b is a piece against which the shutter open pin 141 is abutted when the rotation wheel 104 is rotated in a direction where the first and second shutter plates 105a and 105b close the first and second openings 124 and 144.

As the rotation wheel 104 rotates, the to-be-actuated portion 145 arranged as described above is exposed to the outside from the front surface of the lower shell 107 on which the first opening 124 is formed and moved in the width direction of the first opening 124. When the first and second shutter plates 1055a and 105b open the first opening 124, the to-be-actuated portion 145 is located in a portion widened by the taper portion 124c.

The to-be-actuated portion 145 has an engagement groove 145c formed to the base end portions of the first and second to-be-actuated pieces 145a and 145b, and the engagement groove 145c is engaged with the first shutter plate 105a. When the first and second shutter plates 105a and 105b close the openings 124 and 144, the engagement groove 145c is engaged with the first shutter plate 105a to thereby prevent it from floating up and down. Accordingly, no gap is formed between the peripheral edge portion of the first opening 124 and the first shutter plate 105a, thereby dusts and the like can be prevented from entering the cartridge main body 102.

In the rotation wheel 104 arranged as described above, the first and second shutter plates 105a and 105b are urged by an urging member 148, which will be described later, in the direction where the first and second openings 124 and 144 are closed, and the to-be-actuated portion 145 is rotated by the shutter open pin 141 of the recording and/or replaying apparatus in the direction where the first and second shutter plates 105a and 105b open the first and second openings 124 and 144. At the time, the inner peripheral wall 111 acts as a guide wall when the rotation wheel 104 rotates.

As shown in Fig. 34, in the pair of first and second shutter plates 105a and 105b, which constitute the shutter mechanism for opening and closing the first opening 124 formed to the lower shell 107 and the second opening 144 formed to the rotation wheel 104, the first shutter plate 105a is formed large, and the second shutter plate 105b is formed smaller than the first shutter plate 105a.

The first shutter plate 105a that is large includes a first shutter portion 151, a first rotation support portion 153, and a second shaft hole 154. The first shutter portion 151 closes the first and second openings 124 and 144, the first rotation support portion 153 is rotatably supported by a first support shaft 152 formed between the outer peripheral wall 108 and the inner peripheral wall 111 in the inner surface of the upper shell 106, and the second shutter plate 5b that is small is attached to the shaft hole 154.

The first shutter portion 151 includes a first side edge portion 151a, which is located at one side edge of the second opening 144 of the rotation wheel 104 when the second opening 144 is closed, a second side edge portion 151b formed continuously to the first side edge portion 151a, and a third side edge portion 151c formed continuously to the second side edge portion 51b. The second side edge portion 151b is formed by being bent inward of the first side edge portion 151a, and the third side edge portion 151c is formed by being bent outward of the second side edge portion 151b. Further, a fourth side edge portion 151d, which is in confrontation with the first to third side edge portions 51a to 51c, acts as an escape portion 151e for escaping the bosses 110 and 122, the location hole 126a, an erroneous record prevention member, and the like formed to one corners of the upper and lower shells 106 and 107. The second side edge portion 151b and the third side edge portion 151c are composed of taper portions in an opposite direction.

Further, a groove portion 151f is formed to the first shutter portion 151 on the surface thereof on the lower shell 107 side and engaged with a projection 127 formed to the peripheral edge portion of the first opening 124 of the lower shell 107. When the first and second shutter plates 105a and 105b close the first and second openings 124 and 144, the groove portion 151f is engaged with the projection 127 formed to the peripheral edge portion of the first opening 124 to thereby prevent dusts and the like from entering the cartridge main body 102.

Further, first and second regulation projections 151h and 151g are formed to the first shutter portion 151 on the surface thereof on the optical disc 103 side to regulate displacement of the first shutter plate 105a. The first and second regulation projections 151h and 151g are disposed to positions corresponding to an inner periphery side non-signal recording region around the center hole 103a of the optical disc 103 when the first and second shutter plates 105a and 105b close the first and second openings 124 and 144. Accordingly, even if the first shutter plate 105a is pressed and deformed inward, a signal recording region of the optical disc 103 is not scratched. When the first and second shutter plates 105a and 105b open the first and second openings 124 and 144, the first and second regulation projections 151h and 151g enter escape grooves 155 and 156, which are located near to the center of the rotation wheel 104 and the second opening 144 sides of which are opened so that the rotation of the first shutter plate 105a is not interfered with the first and second regulation projections 151h and 151g. These escape grooves 155 and 156 are also bottomed grooves and separated from the rotation wheel 104 on the side opposite to the side thereof in which the optical disc 103 is accommodated to thereby prevent foreign matters such as worn powder and the like, which are produced by the contact and the like of the first and second regulation projections 151h and 151g with the rotation wheel 104, from entering a space in which the optical disc 103 is accommodated. Note that the displacement of the first shutter plate 105a may be regulated by any one of the regulation projections.

Further, a drive projection 151i is formed to the first shutter portion 151 and is engaged with a drive groove 149 formed to the main surface of the rotation wheel 104. The drive groove 149 is a bottomed groove and prevents foreign matters such as worn powder and the like from entering the rotation wheel 104 in which the optical disc 103 is accommodated. As the rotation wheel 104 rotates, the drive projection 151i rotates the first shutter plate 105a. The drive groove 149 has a first non-acting portion 149a formed at the position of the drive projection 151i when the first shutter plate 105a closes the first and second openings 124 and 144, that is, at one end thereof, an acting portion 149b formed continuous to the first non-acting portion 149a, and a second non-acting portion 149c formed at the position of the drive projection 151i when the first shutter plate 105a opens the first and second openings 124 and 144, that is, at the other end thereof. The first and second non-acting portions 149a and 149c can be formed by agreeing with or by being wider than the locus of the drive projection 151i when the rotation wheel 104 is rotated and causing the drive projection 151i to be not in contact with the groove. Whereas, and the acting portion 149b can be formed by disagreeing with the locus of the drive projection 151i. When the drive projection 151i is located at the positions of the first and second non-acting portions 149a and 149c, only the rotation wheel 104 rotates and the first shutter plate 105a does not rotate. At the time, the first and second non-acting portions 149a and 149c achieve an attitude control function for preventing fluttering and the like of the first shutter plate 105a.

Accordingly, when the first shutter plate 105a begins to rotate, the drive force of the shutter open mechanism of the recording and/or replaying apparatus requires only drive force for rotating the rotation wheel 104 against the urging member 148 and drive force for releasing the engaged state of a first projection 159a formed in the vicinity of the second opening 144 of the rotation wheel 104 and a first recess 158a of the first shutter plate 105a and does not require drive force for rotating the first shutter plate 105a, thereby overall drive force can be reduced. Further, the second non-acting portion 149c is formed to absorb an error of the number of rotation of the rotation wheel 104, and when the drive projection 151i is located at the position of the second non-acting portion 149c, the rotation wheel 104 rotates, and the first shutter plate 105a does not rotate.

A cylindrical portion is formed to the first rotation support portion 153 of the first shutter plate 105a, a first shaft hole 153a is formed at the center of the cylindrical portion, and the first support shaft 152 formed to the upper shell 106 is inserted into the first shaft hole 153a. Accordingly, the first shutter plate 105a is rotatably attached to the upper shell 106 and rotated on the rotation wheel 104. Note that the first shutter plate 105a may be journaled by a support shaft formed to the lower shell 7 in place of the first support shaft 152.

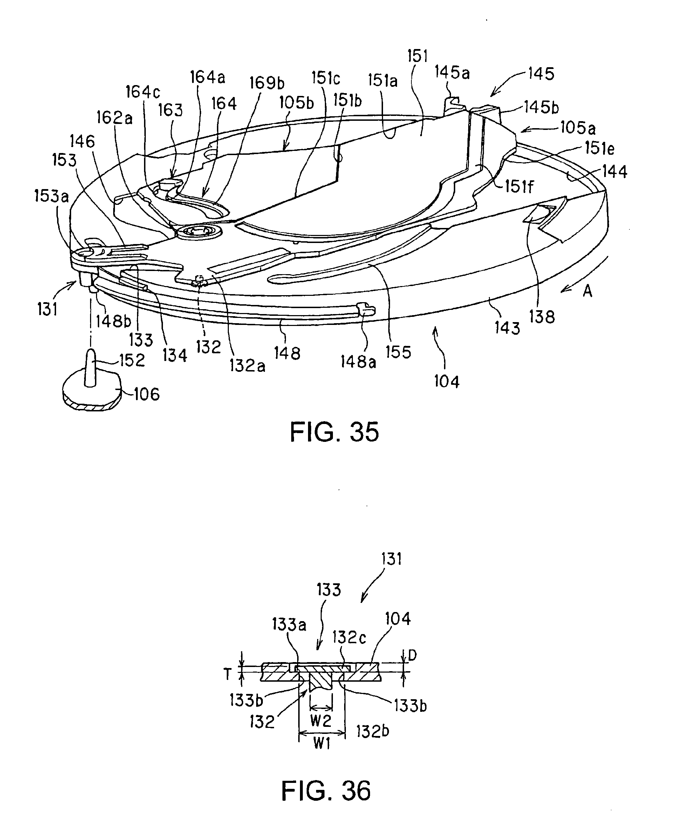

The shutter plate 105a rotatably attached to the first support shaft 152 of the upper shell 106 is coupled with the rotation wheel 104 through the urging member 148 composed of a coil spring and the like. The urging member 148 rotates and urges the rotation wheel 104 in the direction of an arrow A in Fig. 35 where the first and second shutter plates 105a and 105b close the first and second openings 124 and 144. As shown in Fig. 35, the urging member 148 has an end locked to a locking piece 148a formed to the ring portion 143 of the rotation wheel 104 and the other end locked to a locking projection 148b formed in the vicinity of the first shaft hole 153a of the first rotation support portion 153 of the first shutter plate 105a. The urging member 148 is locked to the locking projection 148b of the first rotation support portion 153 of the first shutter plate 105a rotatably attached to the first support shaft 152 of the upper shell 106 and to the locking piece 148a of the rotation wheel 104, thereby the urging member 148 is disposed in a curved state along the outer periphery of the ring portion 143 of the rotation wheel 104. The urging member 148 normally urges and rotates the rotation wheel 104 in the direction of the arrow A in Fig. 35 where the first and second shutter plates 105a and 105b close the first and second openings 124 and 144, and the urging member 148 is extended when it rotates the rotation wheel 104 in a direction where first and second openings 124 and 144 are opened.

Note that the locking projection 148b formed to the first rotation support portion 153 of the first shutter plate 105a is formed in the vicinity of the first shaft hole 153a, that is, in the vicinity of a fulcrum of rotation. With this arrangement, an arc locus drawn when the first shutter plate 105a is rotated has a small radius, which prevents the locking projection 148b from colliding against the outer peripheral walls 108 and 121 of the upper and lower shells 6 and 7, and the like.

Incidentally, as shown in Figs. 34 and 35, a first removal prevention mechanism 131 is disposed to the first shutter plate 105a and the rotation wheel 104 to prevent the first shutter plate 105a from being removed from the main surface of the rotation wheel 104. The first removal prevention mechanism 131 includes a removal prevention projection 132 and a removal prevention groove 133. The removal prevention projection 132 is formed to a projection piece 132a formed adjacent to the first rotation support portion 153 of the first shutter plate 105a, and the removal prevention groove 133 is formed on the main surface of the rotation wheel 104 from the inside to the outer periphery thereof.

As shown in Figs. 34 and 35, the removal prevention projection 132 on the first shutter plate 105a side has an escape preventing portion 132c which is formed so as to swell from the extreme end of a shaft portion 132b formed integrally with the projection piece 132a. In contrast, as shown in Figs. 32, 33 and 35, the removal prevention groove 133 formed to the main surface of the rotation wheel 104 is formed approximately opposite to the to-be-actuated portion 145 with its outer peripheral portion being released from an intermediate portion to the outer peripheral portion. The removal prevention groove 133 has a wide opening end so that the removal prevention projection 132 can easily enter it. Further, the as shown in Fig. 36, the removal prevention groove 133 is a through groove, and thin wall portions 133a are formed on both the sides of the through groove on the optical disc 103 mounting surface side thereof. The escape preventing portion 132c of the removal prevention projection 132 is engaged with the thin wall portions 133a to thereby prevent escaping. The groove width W1 of the removal prevention groove 133 is formed larger than the diameter W2 of the shaft portion 132b of the removal prevention projection 132 to be inserted into the groove so that, when the removal prevention projection 132 enters the removal prevention groove 133, the shaft portion 132b does not come into contact with both the end surfaces 133b of the removal prevention groove 133, that is, with the removal prevention groove 133 in the width direction thereof. With this arrangement, the removal prevention projection 132 does not come into contact with removal prevention groove 133, thereby foreign matters such as worn powder and the like can be prevented from being produced in the cartridge main body 102. Further, the depth D of the thin wall portions 133a is set to D > T so that it is deeper than the thickness T of the escape preventing portion 132c, thereby the optical disc 103 is prevented from coming to contact with the escape preventing portion 132c. When the first and second shutter plates 105a and 105b close the first and second openings 124 and 144, the thin wall portions 133a prevent the escape preventing portion 132c from projecting to the optical disc 103 side.

When the first and second shutter plates 105a and 105b close the first and second openings 124 and 144, the removal prevention projection 132 is engaged with the removal prevention groove 133 to prevent the first shutter plate 105a from being removed from the main surface of the rotation wheel 104. This is because it is during a non-use time in which the first and second shutter plates 105a and 105b close the first and second openings 124 and 144 that the first shutter plate 105a may be removed from the main surface of the rotation wheel 104 by a large shock applied thereto.

Further, the first and second shutter plates 105a and 105b are members interposed between the rotation wheel 104 and the lower shell 107, and the removal prevention projection 132 formed to the first rotation support portion 153 of the first shutter plate 5a projects to the rotation wheel 104 side which is the upper shell 106 side. As shown in Figs. 29, 31, and 37, lifters 135 are formed on the inner surface of the lower shell 107 to lift the first shutter plate 5a to the rotation wheel 104 side when the removal prevention projection 132 of the first shutter plate 105a enters the removal prevention groove 133 of the rotation wheel 104. The lifters 135 are composed of taper portions 135a formed on the rotation wheel 104 side thereof so as to smoothly lift the first shutter plate 105a.

Note that, as shown in Fig. 35, the ring portion 143 of the rotation wheel 104 has a stopper piece 134 formed in a peripheral direction in the vicinity of the removal prevention groove 133. As shown in Fig. 35, when the first and second shutter plates 105a and 105b close the first and second openings 124 and 144, the first rotation support portion 153 of the first shutter plate 105a is located in the vicinity of the opening end of the removal prevention groove 133, and the urging member 148 extends. Accordingly, the urging member 148 extending along the ring portion 143 may interfere with the removal prevention projection 132 when it enters and exits the removal prevention groove 133. The stopper piece 134 formed along the outer periphery of the ring portion 143 regulates that the urging member 148 runs away when it is extended and contracted.

Note that the removal prevention projection 132 may be replaced with the drive projection 151i described above and the removal prevention groove 133 may be replaced with the drive groove 149 by causing the removal prevention projection 132 to come into contact with the removal prevention groove 133. With this arrangement, the drive projection 151i and the drive groove 149 need not be formed, thereby the first shutter plate 105a and the rotation wheel 104 can be simply arranged.

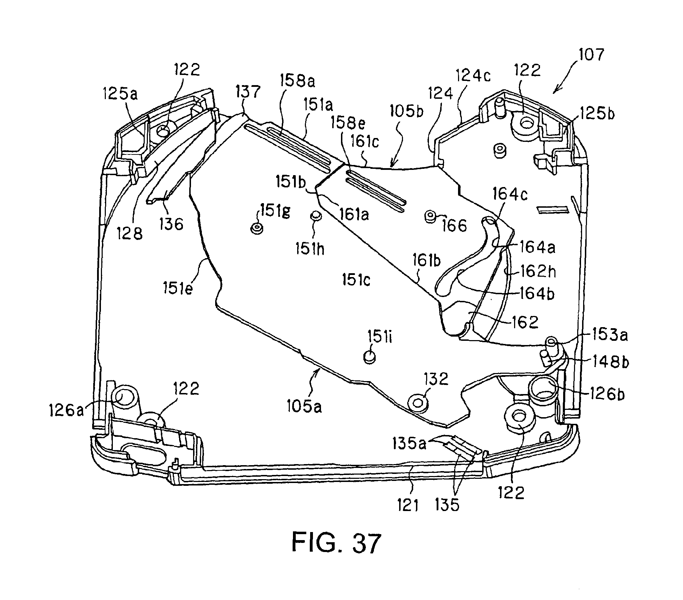

Further, as shown in Fig. 37, a displacement regulating projection 136 is formed integrally with the lower shell 107 to prevent fluttering, that is, displacement of the extreme end of the first shutter plate 105a. When the first shutter plate 105a closes the first and second openings 124 and 144, the displacement regulating projection 136 is engaged with the extreme end of the first shutter plate 105a to thereby prevent fluttering of the first shutter plate 105a caused by vibration when a shock is applied to the first shutter plate 105a. A thin wall portion 137 is formed to the extreme end of the first shutter plate 105a so that the first shutter plate 105a can smoothly enter between the main surface portion of the lower shell 107 and the displacement regulating projection 136 and can be engaged therewith. The first shutter plate 105a is formed thin in its entirety by forming the thin wall portion 137 at the extreme end thereof. In contrast, as shown in Figs. 33 to 35, a lifter 138 is formed to the main surface of the rotation wheel 104 to which the first shutter plate 105a is disposed. The lifter 138 lifts the first shutter plate 105a to the lower shell 107 side so that the thin wall portion 137 formed to the extreme end of the first shutter plate 105a is smoothly engaged with the displacement regulating projection 136.

As shown in Figs. 34 and 35, the second shutter plate 105b engaged with the first shutter plate 105a as described above includes a second shutter portion 161 for closing the first and second openings 124 and 144 together with the first shutter portion 151 and a second rotation support portion 162 attached to the second shaft hole 154 formed to the first shutter plate 105a.

The second shutter portion 161 includes a first side edge portion 161a, a second side edge portion 161b, and a third side edge portion 161c. The first side edge portion 161a is engaged with the second side edge portion 151b of the first shutter portion 151, the second side edge portion 161b is engaged with the third side edge portion 151c of the first shutter portion 151 continuous to the first side edge portion 161a, and the third side edge portion 161c is located opposite to the second side edge portion 161b and continuous to the first side edge portion 161a. The first side edge portion 161a is composed of a taper portion in a direction opposite to a taper portion of the second side edge portion 151b of the first shutter portion 151, and the second side edge portion 161b is composed of a taper portion in a direction opposite to a taper portion of the third side edge portion 151c of the first shutter portion 151. Further, a taper portion of the first side edge portion 161a and a taper portion of the second side edge portion 161b are also formed in an opposite direction. When the first and second shutter plates 105a and 105b close the first and second openings 124 and 144, the second side edge portion 151b of the first shutter portion 151 is meshed with the taper portion of the first side edge portion 161a of the second shutter portion 161, and further the taper portion of the third side edge portion 151c of the first shutter portion 151 is meshed with the taper portion of the second side edge portion 161b of the second shutter portion 161 in an opposite direction, respectively. Accordingly, when the pair of first and second shutter plates 105a and 105b close the first and second openings 124 and 144, the first and second shutter plates 105a and 105b are meshed with each other to thereby prevent dusts and the like from entering inward of the coupling portion as well as make the first and second shutter plates 105a and 105b unlike to flex when they are pressed.

Further, as shown in Fig. 34, a first linear recess 158a is formed to the first side edge portion 151a of the first shutter portion 151, and a first projection 159a, with which the first recess 158a is engaged, is formed to the side edge portion of the second opening 144 of the second opening 144 of the rotation wheel 104 meshed with the first side edge portion 151a. A second linear recess 158b is formed to the second side edge portion 151b of the first shutter portion 151, and a second projection 159b, which is engaged with the second recess 158b, is formed to the first slide edge portion 161a meshed with the second side edge portion 151b. Further, a third linear recess 158c is formed to the third side edge portion 151c of the first shutter portion 151, and a third projection 159c is formed to the second side edge portion 161b meshed with the third side edge portion 151c. Further, a fourth recess 158e, which is meshed with the first projection 159a of the rotation wheel 104, is formed also to the second shutter portion 161. When the first and second shutter plates 105a and 105b close the first and second openings 124 and 144, the first to fourth recesses 158a to 158e are engaged with the first to third projections 159a to 159c to thereby prevent dusts and the like from entering inward of the coupling portion. Note that the shutter plates to which the recesses and the projections are formed are not limited to the example described above, and even shutter plates arranged opposite to the above example can obtain the same effect.

As shown in Figs. 34, 38, and 39, a second support shaft 162a is formed to the second rotation support portion 162. The second support shaft 162a is inserted into the second shaft hole 154 formed to the first rotation support portion 153 of the first shutter plate 105a in a state that it is prevented from being removed by a second removal prevention mechanism 160. Specifically, the second rotation support portion 162a, which acts as the second removal prevention mechanism 160, is composed of elastic pieces 162c and 162d formed through a slit 162b, and further locking portions 162e and 162f, which act as an escape prevention member, are formed to the extreme ends of the respective elastic pieces 162c and 162d so as to expand from the extreme end sides thereof. These locking portions 162e and 162f are arranged as guide portions whose outer surfaces are composed of an R surface (curved surface) or a C surface (inclining surface). The base ends of the locking portions 162e and 162f are formed larger than the diameter of the second shaft hole 154 of the first shutter plate 105a into which the second support shaft 162a is inserted. Further, a recess 154a, to which the locking portions 162e and 162f are locked, is formed around the second shaft hole 154. The second support shaft 162a is guided by the guide portions of the locking portions 162e and 162f and inserted into the second shaft hole 154. At the time, the elastic pieces 162c and 162d are elastically displaced in a direction where they approach to each other to thereby permit the second support shaft 162a to be inserted into the second shaft hole 154, and when the locking portions 162e and 162f are inserted, the elastic pieces 162c and 162d are elastically restored. With this operation, the locking portions 162e and 162f are locked to the bottom surface of the recess 154a around the second shaft hole 154. The disc cartridge 101 is made thin in its entirety by positioning the locking portions 162e and 162f in the recess 154a. As described above, the second support shaft 162a is securely locked to the second shaft hole 154 by the locking portions 162e and 162f so that the second support shaft 162a is not removed from the second shaft hole 154 by a shock due to drop and the like. Note that the number of the elastic pieces 162c and 162d is not limited to two, and three or more elastic pieces may be employed.

Note that when the second support shaft 162a is formed of a resin material, the locking portions 162e and 162f described above may be formed by melting the extreme ends of the elastic pieces 162c and 162d by an ultrasonic wave or heat. Further, the second support shaft 162a may be formed without being provided with slit 162b, that is, without being divided and then may be provided with a locking portion by melting its the extreme end with an ultrasonic wave or heat. Further, the case, in which the second support shaft 162a is disposed to the second shutter plate 105b and the second shaft hole 154 is disposed to first shutter plate 105a, is explained in the above example. However, the second shaft hole 154 may be disposed to the second shutter plate 105b and the second support shaft 162a may be disposed to the first shutter plate 105a.

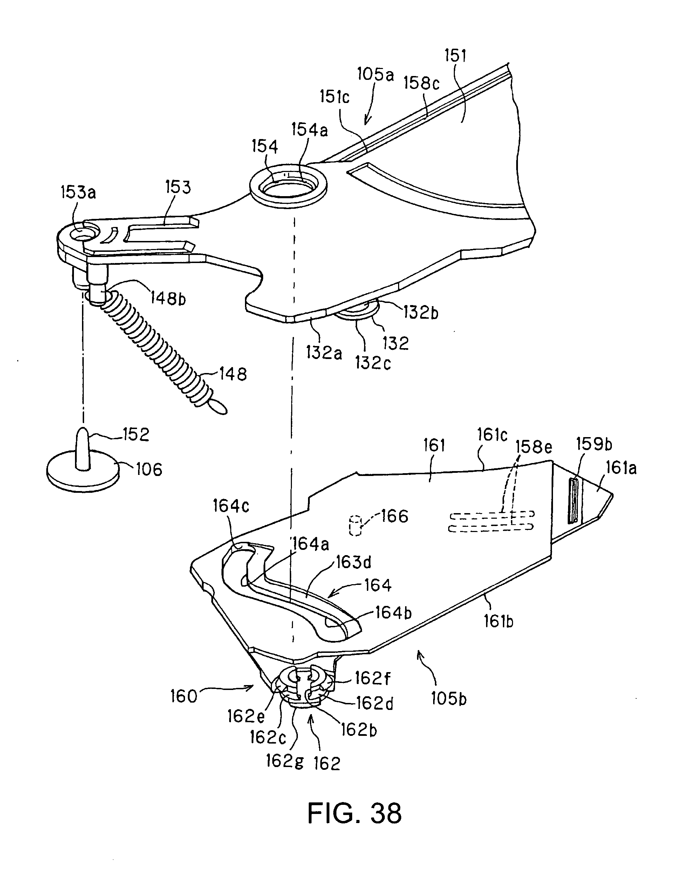

Further, as shown in Fig. 38, the second support shaft 162a is disposed to a seat portion 162g formed integrally with the second rotation support portion 162. The seat portion 162g is a reinforcing portion for reinforcing a portion in which the second support shaft 162a is disposed and formed thicker than the other portions. The seat portion 162g is formed to the rotation wheel 104 so as to be thicker than the other regions. An escape groove 146 is formed to the rotation wheel 104 to escape the seat portion 162g. Further, as shown in Fig. 31, a recess 163e acting as an escape portion of the extreme end of the second support shaft 162a is formed to the inner surface of the lower shell 107.

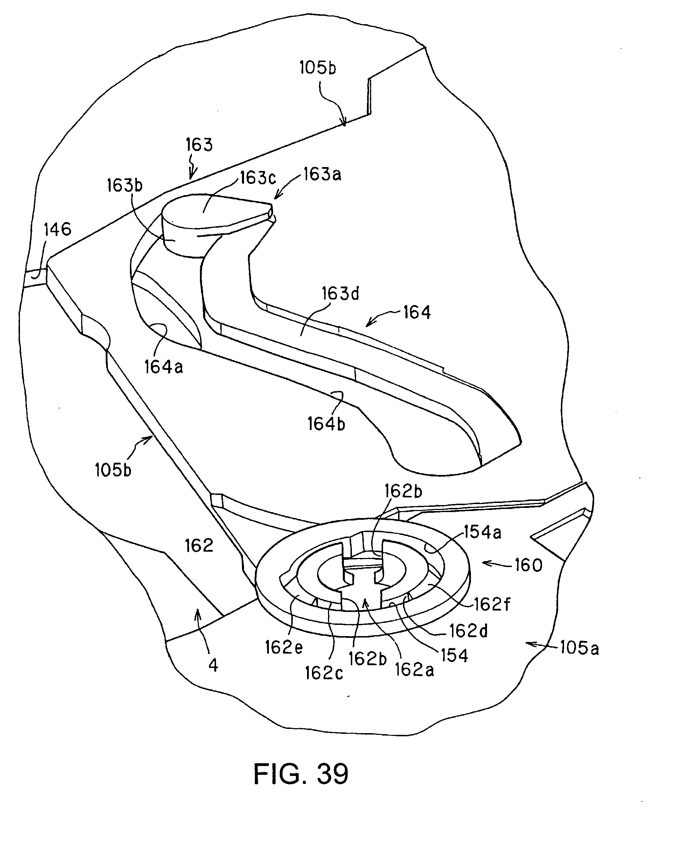

Further, as shown in Figs. 34 and 39, a first cam portion 164 is formed to the second shutter portion 161, and the first cam portion 164 is composed of a through groove with which a first control projection 163 formed to the rotation wheel 104 is engaged. The first control projection 163 is engaged with the first cam portion 164 so that the first cam portion 164 controls the rotation of the second shutter plate 105b. The first cam portion 164 has a first acting portion 164a located on a side apart from the second support shaft 162a acting as a fulcrum of rotation of the second shutter plate 105b and a first non-acting portion 164b located on a side near to the second support shaft 162a and continuous to the first acting portion 164a. The continuous first acting portion 164a is curved in a first direction, the first non-acting portion 164b is curved in a second direction, and the first acting portion 164a and the first non-acting portion 164b are composed of through grooves curved in an opposite direction from each other. The first acting portion 164a located on the side apart from the second support shaft 162a acts when the second shutter plate 105b is rotated during a former half period in which the second shutter plate 105b opens the first and second openings 124 and 144. Whereas, the first non-acting portion 164b, which is located on the side near to the second support shaft 162a and continuous to the first acting portion 164a, is a potion which executes no action during a latter half period in which the second shutter plate 105b opens the first and second openings 124 and 144.

Note that the first acting portion 164a can be formed by disagreeing with the locus of the first control projection 163 when the rotation wheel 104 is rotated. Whereas, the first non-acting portion 164b can be formed by agreeing with or by being wider than the locus of the first control projection 163 and causing the first control projection 163 to be not in contact with the groove.

As shown in Fig. 39, the first control projection 163 is securely disposed on the rotation wheel 104 by a third removal prevention mechanism 163a. The first control projection 163 of the rotation wheel 104, which acts as the third removal prevention mechanism 163a, has an escape prevention member 163c formed so as to swell from the extreme end of a shaft portion 163b. The escape prevention member 163c is formed by protruding from a part of the shaft portion 163b in a protruding state without protruding from the entire periphery thereof, thereby a metal mold is simplified. In contrast, the through groove, which constitutes the first cam portion 164, is formed in such a width that the shaft portion 163b can be inserted thereinto, and thin wall portions 163d, to which the escape prevention member 163c is locked, are formed on both the sides of the through groove. The escape prevention member 163c is engaged with the thin wall portions 163d, thereby the wall thickness thereof can be reduced. As shown in Fig. 31, a recess 162h, which acts as an escape portion of the escape prevention member 163c, is further formed on the inner surface of the lower shell 107.

Note that the third removal prevention mechanism 163a may be also arranged likewise the second removal prevention mechanism 160 described above.

Further, as shown in Fig. 34, a second control projection 166 is formed to the second shutter portion 161 and engaged with a second cam portion 165 composed of a groove formed on the main surface of the rotation wheel 104. The second cam portion 165 is composed of a second non-acting portion 165a and a second acting portion 165b. The second non-acting portion 165a is curved in a first direction on the center side of the rotation wheel 104, and the second acting portion 165b is curved in a second direction opposite to the first direction on the outer periphery side of the rotation wheel 104. The second cam portion 165 is formed of a bottomed groove and prevents foreign matters such as worn powder, dusts, and the like from entering the rotation wheel 104. The second non-acting portion 165a executes no action during the former half period in which the second shutter plate 105b opens the first and second openings 124 and 144, whereas the second acting portion 165b executes an action during the latter half period in which the second shutter plate 105b opens the first and second openings 124 and 144. Accordingly, the second non-acting portion 165a executes no action during the former half period in which the second shutter plate 105b opens the first and second openings 124 and 144, and when the second control projection 166 moves from the second non-acting portion 165a to the second acting portion 165b, that is, during the latter half period of rotation of the second shutter plate 105b, the second acting portion 165b rotates the second shutter plate 105b in place of the first acting portion 164a of the first cam portion 164 described above. As described above, when the second shutter plate 105b opens the first and second openings 124 and 144, the disc cartridge 1 prevents occurrence of dusts and the like due to wear by dividing the acting portion in the former half period and the latter half period.

Note that the second non-acting portion 165a can be formed by agreeing with or by being wider than the locus of the second control projection 166 when the rotation wheel 104 rotates and causing the second control projection 166 to be not in contact with the groove. Whereas, the second acting portion 165b can be formed by disagreeing with the locus of the second control projection 166.

Incidentally, as shown in Figs. 34 and 39, a third non-acting portion 164c is formed to the first cam portion 164 with which the first control projection 163 formed to the rotation wheel 104 is engaged, and the third non-acting portion 164c is located on a side apart from the second support shaft 162a acting as the fulcrum of rotation of the second shutter plate 105b and upward of the first acting portion 164a, that is, on a side opposite to the first non-acting portion 164b. When the second shutter plate 5a is located at the position where it closes the first and second openings 124 and 144, the first control projection 163 is located at the position of the third non-acting portion 164c. The third non-acting portion 164c is formed so as to agree with or be wider than the locus of the first control projection 163 when the rotation wheel 104 begins to rotate in the direction where the second shutter plate 105b opens the first and second openings 124 and 144. Accordingly, when the first control projection 163 is located at the position of the third non-acting portion 164c, only the rotation wheel 104 rotates, and the second shutter plate 105b does not rotate. Then, the first projection 159a formed in the vicinity of the second opening 144 of the rotation wheel 104 is only disengaged from the fourth recess 158e of the second shutter plate 105b. At the time, the third non-acting portion 164c achieves an attitude control function for preventing fluttering and the like of the second shutter plate 105b. Next, when the first control projection 163 moves to the first acting portion 164a adjacent to the third non-acting portion 164c, the second shutter plate 105b begins to rotate. Note that, thereafter, the first control projection 163 moves to the first non-acting portion 164b.

As described above, when the disc cartridge 101 is mounted on the recording and/or replaying apparatus and begins to rotate, the drive force of the shutter open mechanism of the recording and/or replaying apparatus requires drive force for rotating the rotation wheel 104 against the urging member 148 and drive force for disengaging the first projection 159a formed in the vicinity of the second opening 144 of the rotation wheel 104 from the fourth recess 158e of the second shutter plate 105b and does to require drive force for rotating the second shutter plate 105b, thereby overall drive force can be reduced. When the first control projection 163 moves to the first acting portion 164a and the first non-acting portion 164b, only drive force for rotating the rotation wheel 104 against the urging member 148 and drive force for rotating the first and second shutter plates 105a and 105b are required and drive force for disengaging the first projection 159a formed in the vicinity of the second opening 144 of the rotation wheel 104 from the fourth recess 158e of the second shutter plate 105b is not required, thereby the overall drive force of the shutter open mechanism can be reduced. Note that when the first control projection 163 is located in the first non-acting portion 164b, the second control projection 166 of the second shutter plate 105b is rotated by the second acting portion 165b of the second cam portion 165.

Further, a fourth non-acting portion 165c is formed downward of the second acting portion 165b of the second cam portion 165, that is, opposite to the second non-acting portion 165a. The fourth non-acting portion 165c is a portion in which the second control projection 166 is finally located when the second shutter plate 105b opens the first and second openings 124 and 144. The fourth non-acting portion 165c is a final portion where the first and second shutter plates 105a and 105b of the rotation wheel 104 open the first and second openings 124 and 144 and formed to agree with or to be wider than the locus of the second control projection 166. Accordingly, when the second control projection 166 moves from the second acting portion 165b and is located in the fourth non-acting portion 165c, the rotation wheel 104 rotates, and the first and second shutter plates 105a and 105b do not rotate. The fourth non-acting portion 165c is formed to absorb the error of the number of rotation of the rotation wheel 104, and, when the drive projection 166 is located in the fourth non-acting portion 165c, the rotation wheel 104 rotates, and the second shutter plate 105b does not rotate.

A relation among the first and second control projections 163 and 166 and the first and second cam portions 164 and 165 will be explained here in summary as to the rotation of the rotation wheel 104 and the rotation of the second shutter plate 105a, 105b. First, when the disc cartridge 101 is not used, that is, when the second shutter plate 105b is located at the position where it closes the first and second openings 124 and 144, the first control projection 163 is located in the third non-acting portion 164c of the first cam portion 164, and, when the rotation wheel 104 begins to rotate, the first control projection 163 moves from the third non-acting portion 164c to the first acting portion 164a and begins to rotate the second shutter plate 105b. At the time, the second control projection 166 is located in the second non-acting portion 165a of the second cam portion 165 and executes no action.

Further, when the rotation wheel 104 rotates, the first control projection 163 moves from the first acting portion 164a of the first cam portion 164 to the first non-acting portion 164b thereof. Then, the second control projection 166 moves from the second non-acting portion 165a of the second cam portion 165 to the second acting portion 165b thereof. That is, the second shutter plate 105b is rotated by the second control projection 166, which is engaged with the second acting portion 165b of the second cam portion 165, in place of the first control projection 163 which is engaged with the first non-acting portion 164b of the first cam portion 164.

Finally, the second control projection 166 moves from the second acting portion 165b of the second cam portion 165 to the fourth non-acting portion 165c thereof. At the time, the first control projection 163 is still located in the first non-acting portion 164b of the first cam portion 164. With the above operation, the opening operation executed by the second shutter plate 105a, 105b to open the first and second openings 124 and 144 is finished.

A method of assembling the disc cartridge 1 arranged as described above will be explained. To assemble the disc cartridge 1, first, as shown in Fig. 38, the first shutter plate 105a is combined with the second shutter plate 105b in a state that they are prevented from being removed by the second removal prevention mechanism 160 by attaching the second support shaft 162a of the second shutter plate 105b to the second shaft hole 154 of the first shutter plate 105a. That is, the first shutter plate 105a is combined with the second shutter plate 105b by inserting the second support shaft 162a into the second shaft hole 154 and locking the locking portions 162e and 162f to the bottom of the recess 154a around the second shaft hole 154.

Next, the thus combined first and second shutter plates 105a and 105b are disposed on the rotation wheel 104. That is, the first and second shutter plates 105a and 105b are disposed on the rotation wheel 104 by engaging the removal prevention projection 132, which constitutes the first removal prevention mechanism 131 of the first shutter plate 105a, with the removal prevention groove 133 of the rotation wheel 104, engaging the escape prevention member 163c of the first control projection 163a, which constitutes the third removal prevention mechanism 163a, of the rotation wheel 104, with the groove of the first cam portion 164 of the second shutter plate 105b, engaging the drive projection 151i of the first shutter plate 105a with the drive groove 149 of the rotation wheel 104, and further engaging the second control projection 166 of the first shutter plate 105a with the second cam portion 165 of the second shutter plate 105b.

When the first and second shutter plates 105a and 105b are disposed on the rotation wheel 104, the urging member 148 is attached by locking one end to the locking piece 148a formed to the ring portion 143 of the rotation wheel 104 and the other end to the locking projection 148b formed in the vicinity of the first shaft hole 153a of the first rotation support portion 153 of the first shutter plate 105a as shown in Fig. 35. When the urging member 148 is stretched between the rotation wheel 104 and the first shutter plate 105a, the rotation wheel 104, to which the first and second shutter plates 105a and 105b and the urging member 148 are attached, is rotatably disposed on the upper shell 106 with the to-be-actuated portion 145 facing a front surface side in a state that the first support shaft 152 formed to the inner surface of the upper shell 106 is inserted into the first shaft hole 153a of the first shutter plate 105a. At the time, the rotation wheel 104 is attached to the upper shell 106 in the state that the urging member 148 is stretched between the first shutter plate 105a and the rotation wheel 104. Accordingly, an assembling job can be executed more easily that a case that the urging member 148 is stretched between the rotation wheel 104 and the first shutter plate 105a after the rotation wheel 104 is disposed on the upper shell 106.

Thereafter, the disc cartridge 101 is completed by combining the lower shell 107 with the upper shell 106, on which the rotation wheel 104 and the first and second shutter plates 105a and 105b are disposed, and coupling them with each other by screws.

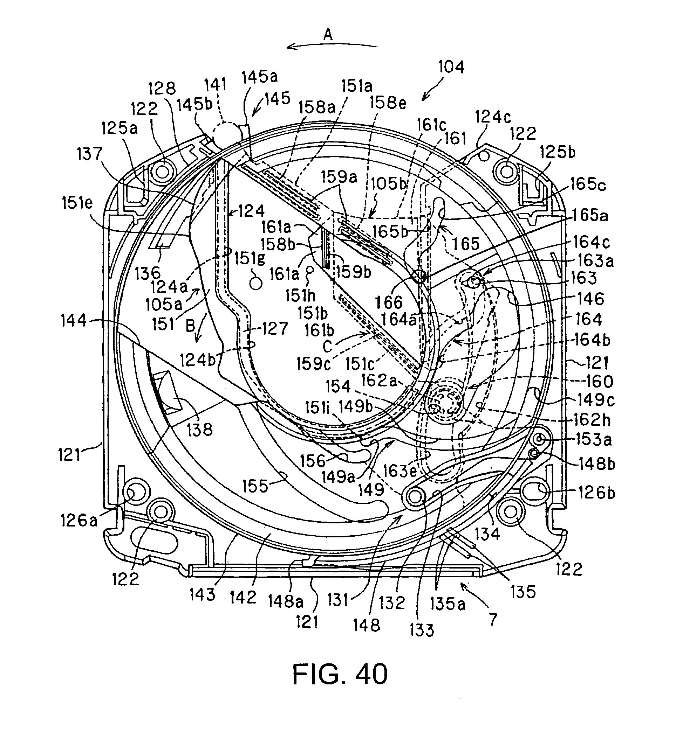

Before the disc cartridge 101 arranged as described above is mounted on the recording and/or replaying apparatus, it is in the states shown in Figs. 27, 28, and 40. That is, when the pair of the first and second shutter plates 5a and 5b close the first and second openings 124 and 144, the rotation wheel 104 is rotated in and urged against the direction of an arrow D in Fig. 40 by the urging force of the urging member 148, the to-be-actuated portion 145 is located at one side edge of the first opening 124, and the position of the first opening 124 of the lower shell 107 disagrees with the position of the second opening 144 of the rotation wheel 104. Since the first shutter plate 105a is engaged with the engagement groove 145c of the to-be-actuated portion 145 as shown in Fig. 28, the first shutter plate 105a is prevented from floating up and down. Further, as shown in Fig. 34, the second side edge portion 151b of the first shutter portion 151 is meshed with the taper portion of the first side edge portion 161a of the second shutter portion 161, and further the taper portion of the third side edge portion 151c of the first shutter portion 151 is meshed with the taper portion of the second side edge portion 161b of the second shutter portion 161 in an opposite direction, respectively. That is, the disc cartridge 101 is made unlike to flex and deform by the first and second shutter plates 105a and 105b meshed with each other as well as the floating up of the first shutter plate 105a is prevented, thereby foreign matters such as dusts and the like are prevented from entering the cartridge main body 102. Further, since the first to fourth recesses 158a to 158e are engaged with the first to third projections 159a to 159c, dusts and the like are prevented from entering inward from the coupling portion.

At the time, as shown in Fig. 40, the drive projection 151i of the first shutter plate 105a is located in the non-acting portion 149a at an end of the drive groove 149 of the rotation wheel 104, and the first shutter plate 105a is located at the position where it closes the first and second openings 124 and 144. Further, the first control projection 163 is engaged with the third non-acting portion 164c of the first cam portion 164 of the second shutter plate 105b, the second control projection 166 of the second shutter plate 105b is engaged with the second non-acting portion 165a of the second cam portion 165 of the rotation wheel 104, and, the first shutter plate 105a closes the first opening 124 of the lower shell 107 as shown in Fig. 28.

Further, the guide projection 151g and the regulation projection 151h of the first shutter plate 105a are located in the second opening 144. The guide projection 151g and the regulation projection 151h of the first shutter plate 105a are located in correspondence to the inner periphery side non-signal recording region around the center hole 103a of the optical disc 103 accommodated in the rotation wheel 104. Accordingly, even if the first shutter plate 105a is pressed, since the guide projection 151g and the regulation projection 151h of the first shutter plate 105a are abutted against the inner periphery side non-signal recording region of the optical disc 103 and the first shutter portion 151 is not in contact with the signal recording region of the optical disc 103, the signal recording region can be prevented from being scratched.

When the disc cartridge 101 is not used as described above, the user may drop the disc cartridge 101 by mistake when he or she is going to insert it into the recording and/or replaying apparatus or when he or she carries it. That is, a large shock is often applied to the disc cartridge 101 when it is not used. Thus, in the disc cartridge 101, the first shutter plate 105a is prevented from being removed from the rotation wheel 104 by providing the first removal prevention mechanism 131. That is, when the first and second shutter plates 105a and 105b close the first and second openings 124 and 144 at the time the disc cartridge 101 is not used, the removal prevention projection 132 is engaged with the removal prevention groove 133 to thereby prevent the shutter plate 105a from being removed from the main surface portion of the rotation wheel 104.

Further, the disc cartridge 101 is provided with the second removal prevention mechanism 160 to prevent the second shutter plate 105b from being removed from the first shutter plate 105a. That is, the second shutter plate 105b, which is attached to the first shutter plate 105a whose removal from the rotation wheel 104 is prevented by the first removal prevention mechanism 131, is prevented from being removed from the first shutter plate 105a by locking the locking portions 162e and 162f of the second support shaft 162a of the second shutter plate 105b to the second shaft hole 154 of the first shutter plate 105a.

Further, in the disc cartridge 101, the second shutter plate 105b is prevented from being removed from the rotation wheel 104 by the third removal prevention mechanism 163a. That is, the escape prevention member 163c, which is formed to the extreme end of the first control projection 163 formed to the rotation wheel 104, is engaged with the thin wall portion 163d of the through groove constituting the first cam portion 164, thereby the second shutter plate 105b is prevented from being removed from the rotation wheel 104.

As described above, the second shutter plate 5b is prevented from being removed from the rotation wheel 104 by the first removal prevention mechanism 131, the second shutter plate 105b is prevented from being removed from the second shutter plate 105b by the second removal prevention mechanism 160, and further the second shutter plate 105b is prevented from being removed from the rotation wheel 104 by the third removal prevention mechanism 163a. Accordingly, even if a large shock is applied to the disc cartridge 101 at the time it is not used, the first and second shutter plates 105a and 105b can be prevented from being removed from the rotation wheel 104, a malfunction, which makes the rotation wheel 104 and the first and second shutter plates 105a and 105b unrotational, can be prevented.

Further, when the disc cartridge 101 is not used, since the thin wall portion 137 at the extreme end of the first shutter plate 105a is engaged with the displacement regulating projection 136 of the lower shell 107, the first shutter plate 105a can be prevented from being fluttered even if a large shock is applied to the cartridge main body 102. Therefore, it can be prevented, for example, that the extreme end of the first shutter plate 105a is fluttered by a shock, enters the rotation wheel 104 from the second opening 144 thereof and scratches the optical disc 103 accommodated therein or makes the first shutter plate unrotatable. Since the displacement regulating projection 136 is formed integrally with the lower shell 107, secondary processing for forming the displacement regulating projection 136 is unnecessary, which simplifies a manufacturing process.

The disc cartridge 101 as described above is inserted into the recording and/or replaying apparatus using the front surface thereof formed in the approximately arc shape as its insertion end. When the disc cartridge 101 is inserted into the recording and/or replaying apparatus, first, the pair of insertion guide pins formed to the mounting portion of the recording and/or replaying apparatus are inserted into the guide grooves 125a and 125b. When the disc cartridge 101 is mounted on the mounting portion of the recording and/or replaying apparatus by being guided by the insertion guide pins, a positioning pin of the mounting portion is engaged with the location hole 126a and the alignment hole 126b, thereby the disc cartridge 101 is mounted on the mounting portion in an accurately positioned state. Then, the shutter open pin 141, which constitutes the shutter open mechanism of the recording and/or replaying apparatus, is engaged with the to-be-actuated portion 145 of the rotation wheel 104. Thus, the rotation wheel 104 is rotated in the direction of an arrow A in Fig. 40 by the shutter open pin 141 of the recording and/or replaying apparatus engaged with the to-be-actuated portion 145 of the rotation wheel 104. The rotation wheel 104 is rotated by the shutter open pin 141 opposite to the arrow A in Fig. 40 against the urging force of the urging member 148.

When the rotation wheel 104 begins to rotate, the first shutter plate 105a does not rotate because the drive projection 151i formed to the first shutter portion 151 moves in the non-acting portion 149a of the drive groove 149 formed to the rotation wheel 104 toward the acting portion 149b of the drive groove 149. Further, when the rotation wheel 104 begins to rotate, the second shutter plate 105b does not rotate because the first control projection 163 formed to the rotation wheel 104 moves in the third non-acting portion 164c of the first cam portion 164 toward the first acting portion 164a thereof, and the second control projection 166 of the second shutter plate 105b moves in the second non-acting portion 165a of the second cam portion 165 toward the second acting portion 165b thereof. That is, when the rotation wheel 104 begins to rotate, only the rotation wheel 104 rotates opposite to the arrow A in Fig. 40, and the first and second shutter plates 105a and 105b do not rotate. Since only the rotation wheel 104 rotates, the first projection 159a, which is formed in the vicinity of the second opening 144 of the rotation wheel 104, is disengaged from the first recess 158a of the first shutter plate 105a and the fourth recess 158e of the second shutter plate 105b. When the rotation wheel 104 starts rotation, the drive force of the shutter open mechanism of the recording and/or replaying apparatus requires only drive force for driving the rotation wheel 104 against the urging member 148 and drive force for disengaging the first projection 159a, which is formed in the vicinity of the second opening 144 of the rotation wheel 104, from the first recess 158a of the first shutter plate 105a and the fourth recess 158e of the second shutter plate 105b, and does not require drive force for rotating the first and second shutter plates 105a and 105b, thereby overall drive force can be reduced.

Further, when the rotation wheel 104 is rotated opposite to the arrow A in Fig. 40, since the drive projection 151i formed to the first shutter portion 151 moves from the non-acting portion 149a of the drive groove 149 formed to the rotation wheel 104 to the acting portion 149b thereof, the first shutter plate 105a begins to rotate in the direction of an arrow B in Fig. 40 about the first support shaft 152 of the upper shell 106. As the first shutter plate 105a rotates, the first control projection 163 formed to the rotation wheel 104 moves from the third non-acting portion 164c of the first cam portion 164 to the first acting portion 164a thereof, and the second control projection 166 of the second shutter plate 105b moves in the second non-acting portion 165a of the second cam portion 165 toward the second acting portion 165b thereof, thereby the second shutter plate 105b begins to rotate in the direction of an arrow C in Fig. 40 about the second support shaft 162a attached to the second shaft hole 154 of the first shutter plate 105a. That is, since the second control projection 166 of the second shutter plate 105b only moves in the second non-acting portion 165a of the second cam portion 165, it executes no action to the rotation of the second shutter plate 105b, and the second shutter plate 105b is rotated by that the first control projection 163 of the rotation wheel 104 moves in the first acting portion 164a of the first cam portion 164.

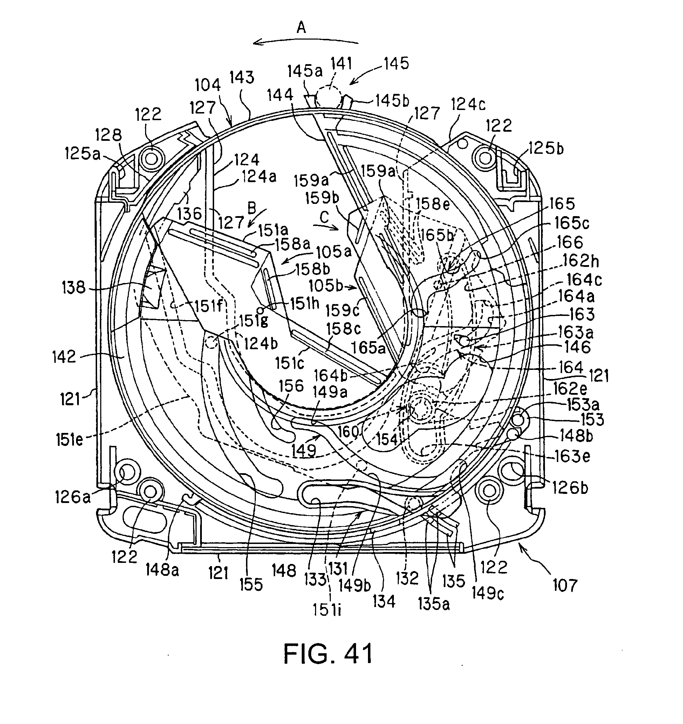

Further, when the rotation wheel 104 rotates opposite to the arrow A in Fig. 40, the drive projection 151i, which is formed to the first shutter portion 151, moves in the acting portion 149b of the drive groove 149 formed to the rotation wheel 104, thereby the drive projection 151i rotates in the direction of the arrow B in Fig. 40 about the first support shaft 152 of the shell 6 as shown in Fig. 41. Further, as the first shutter plate 105a rotates, the first control projection 163, which is formed to the rotation wheel 104, moves from the first acting portion 164a of the first cam portion 164 to first non-acting portion 164b thereof, and the second control projection 166 of the second shutter plate 105b moves from the second non-acting portion 165a of the second cam portion 165 to the second acting portion 165b thereof, thereby the second shutter plate 105b is continuously rotated in the direction of the arrow C in Fig. 40 about the second support shaft 162a attached to the second shaft hole 154 of the first shutter plate 105a. That is, in a latter half period after the state shown in Fig. 41, the second shutter plate 105b is rotated by that the second control projection 166 of the second shutter plate 105b moves in the second acting portion 165b of the second cam portion 165, and the first control projection 163 of the rotation wheel 104, which executed an action until that time, executes no action by moving from the first acting portion 164a to the first non-acting portion 164b. From the state shown in Fig. 41, a control projection for rotating the second shutter plate 105b is replaced from the first control projection 163 engaged with the first acting portion 164a of the first cam portion 164 to the second control projection 166 engaged with the second acting portion 165b of the second cam portion 165.

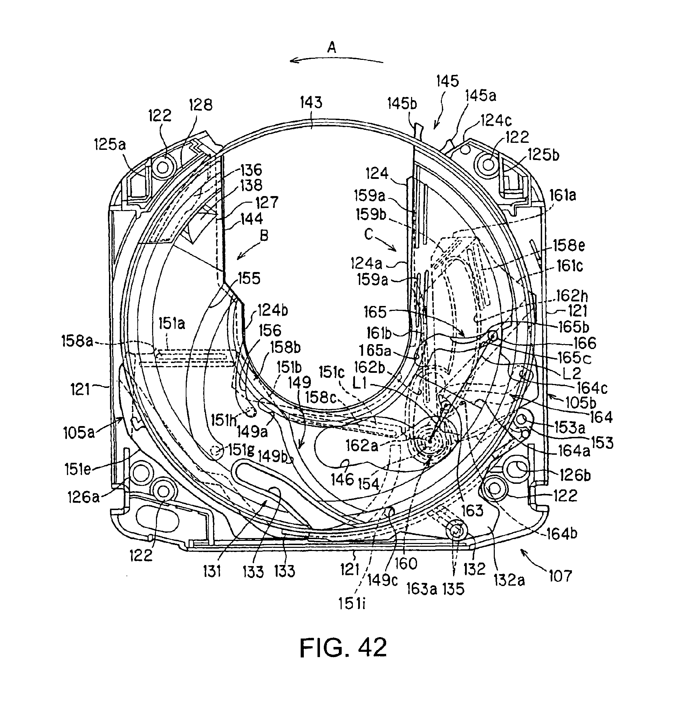

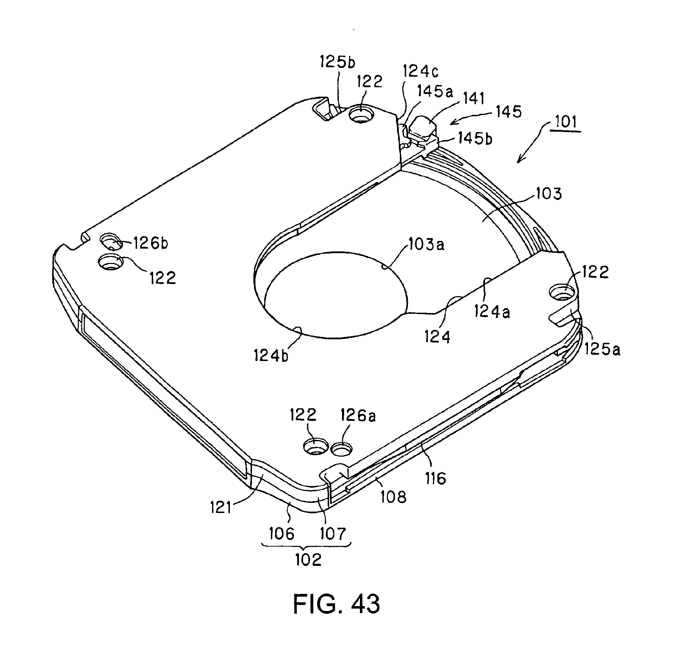

Further, when the rotation wheel 104 rotates opposite to the arrow A in Fig. 40, the position of the first opening 124 of the lower shell 107 agrees with the position of the second opening 144 of the rotation wheel 104. At the time, since the drive projection 151i formed to the first shutter portion 151 moves in the acting portion 149b of the drive groove 149 formed to the lower shell 107 and further moves up to the non-acting portion 149c thereof, the first shutter plate 105a is rotated in the direction of an arrow B in Fig. 42 about the first support shaft 152 of the upper shell 6 to thereby open the first and second openings 124 and 144. Further, as the first shutter plate 105a rotates, the first control projection 163 formed to the rotation wheel 104 moves in the first acting portion 164a of the first cam portion 164 up to an end thereof, and the second control projection 166 of the second shutter plate 105b moves in the second acting portion 165b of the second cam portion 165 and further moves to the third non-acting portion 164c. Accordingly, the second shutter plate 105b continuously rotates in the direction of an arrow C in Fig. 42 about the second support shaft 162a attached to the second shaft hole 154 of the first shutter plate 105a, thereby the first and second openings 124 and 144 are opened as shown in Fig. 43.

Note that the first shutter plate 105a completely opens at the time the drive projection 151i moves from the acting portion 149b of the drive groove 149 to the non-acting portion 149c thereof, and the second shutter plate 105b completely opens at the time the second control projection 166 moves from the second acting portion 165b of the second cam portion 165 to the fourth non-acting portion 165c thereof. In contrast, the rotation wheel 104 slightly moves opposite to an arrow A in Fig. 42, and, at the time, since the drive projection 151i moves in the non-acting portion 149c of the drive groove 149 and the second control projection 166 moves in the fourth non-acting portion 165c of the second cam portion 165, the first and second shutter plates 105a and 105b do not rotate. A reason why only the rotation wheel 104 moves in the final stage is to absorb the error of the number of rotation of the rotation wheel 104.

Further, as shown in Fig. 42, the second shutter plate 105b can be rotated by weak drive force by engaging the second control projection 166, which is apart from the second support shaft 162a, with the second acting portion 165b of the second cam portion 165 in the latter half period of the rotating operation in place of using the first control projection 163 which approaches the second support shaft 162a acting as the fulcrum of rotation of the second shutter plate 105b. More specifically, the second shutter plate 105b can be rotated by the weak drive force by making the distance L2 from the second support shaft 162a acting as the fulcrum of rotation of the second shutter plate 105b to the second control projection 166 located in the second acting portion 165b or in the fourth non-acting portion 165c of the second cam portion 165 longer than the distance L1 from the second support shaft 162a to the first control projection 163 located in the first non-acting portion 164b of the first cam portion 164. Further, the disc cartridge 101 can prevent dusts such as worn powder and the like from being produced in the cartridge main body 102 by the rotation of the first and second shutter plates 105a and 105b by employing the separated acting portions in the former half period and the latter half period of the rotation of the first and second shutter plates 105a and 105b, that is, by using the first acting portion 164a of the first cam portion 164 and the second acting portion 165b of the second cam portion 165.

Further, after the state shown in Fig. 41, as the rotation wheel 104 and the first shutter plate 105a rotate, the removal prevention projection 132 of the first removal prevention mechanism 131 is removed from the removal prevention groove 133 of the rotation wheel 104 and evacuated from the accommodation space of the optical disc 103. In a series of processes in which the rotation wheel 104 rotates and the first and second shutter plates 105a and 105b rotate, the urging member 148 is extended by the rotation of the rotation wheel 104. However, the urging member 148 is regulated to runs away by the stopper piece 134 formed to the ring portion 143 of the rotation wheel 104, thereby the removal prevention projection 132 can be smoothly evacuated from the removal prevention groove 133.

The center hole 3a of the optical disc 103 rotatably accommodated in the rotation wheel 104 is engaged with the disc table of the disc rotation drive mechanism of the recording and/or replaying apparatus as well as the optical disc 103 is clamped between the clamping plate 113 disposed to the upper shell 106 and the disc table, thereby the optical disc 103 is kept in a rotatable state by the disc table. When an information signal is recorded to the optical disc 103 or when an information signal recorded on the optical disc 103 is replayed, the optical disc 103 is rotated by the disc table at a CLV (constant linear velocity), a CAV (constant angular velocity), or at a combination thereof. At the same time, an optical beam with a wavelength of about 400 nm, which is emitted from a semiconductor laser to the signal recording region of the optical disc 103, is converged by an objective lens and irradiated onto the signal recording surface of the optical disc 103. An optical pickup entering the first and second openings 124 and 144 detects the optical beam reflected on and returned from the signal recording surface to thereby record an information signal on the optical disc 103 or reads out an information signal recorded on the optical disc 103.

Note that when the disc cartridge 101 is discharged from the recording and/or replaying apparatus, since the shutter open pin 141 is removed from the to-be-actuated portion 145, the rotation wheel 104 is rotated in the direction of the arrow A in Fig. 42 by the urging force of the urging member 148 and returned to the state of Fig. 40 through the state of Fig. 41. In a series of processes in which the rotation wheel 104 rotates in the direction of the arrow A in Fig. 42, the drive projection 151i of the first shutter plate 105a moves from the non-acting portion 149c of the drive groove 149 of the rotation wheel 104 to the non-acting portion 149a thereof through the acting portion 149b thereof, rotates the first shutter plate 105a opposite to the arrow B in Figs. 40 to 42, and closes the first and second openings 124 and 144. Further, the first control projection 163 of the rotation wheel 104 for rotating the second shutter plate 105b moves from the first non-acting portion 164b of the first cam portion 164 to the third non-acting portion 164c thereof through the first acting portion 164a thereof, and the second control projection 166 of the second shutter plate 105b moves from the fourth non-acting portion 165c to the second non-acting portion 165a through the second acting portion 165b. With these operations, the second shutter plate 105b rotates opposite to the direction of the arrow C in Figs. 40 to 42 and closes the first and second openings 124 and 144.

As shown in Fig. 41, when the first shutter plate 105a rotates opposite to the direction of the arrow B in Fig. 41, the thin wall portion 137 at the extreme end of the first shutter plate 105a is engaged between the displacement regulating projection 136 of the lower shell 107 and the main surface thereof. When the thin wall portion 137 at the extreme end of the first shutter plate 105a enters the displacement regulating projection 136, the first shutter plate 105a is lifted to the lower shell 107 side by the lifter 138 of the rotation wheel 104, thereby the thin wall portion 137 can be smoothly engaged between the displacement regulating projection 136 and the main surface of the lower shell 107. Further, although the urging member 148 is contracted at the time, the stopper piece 134 formed to the ring portion 143 of the rotation wheel 104 regulates the runaway of the urging member 148. Accordingly, the removal prevention projection 132 can smoothly enter the removal prevention groove 133. Further, as shown in Fig. 41, when the second shutter plate 105b rotates opposite to the direction of the arrow B in Fig. 41, the removal prevention projection 132 of the first shutter plate 105a enters the removal prevention groove 133. At the time, the first shutter plate 105a is lifted by the lifters 135 of the lower shell 107, thereby the removal prevention projection 132 can smoothly enter the removal prevention groove 133 of the rotation wheel 104.

Although the small disc cartridges 1 and 101, to which the present invention is applied, have been explained as examples, the present invention is by no means limited thereto and can be also applied to a standard size disc cartridge as disclosed in, for example, Japanese Patent Application Laid-Open Publication No. 2003-109343.

### Industrial Applicability

According to the present invention, since the locking portions having the diameter larger than the shaft hole are disposed to the extreme end of the support shaft in the state that the second shutter plate is attached to the first shutter plate, even if a shock due to drop is applied thereto, the support shaft can be prevented from being removed from the shaft hole.

Further, according to the present invention, removal of the shutter plates from predetermined members can be prevented by the first to third removal prevention mechanisms, thereby a malfunction of the recording and/or replaying apparatus can be prevented as well as dusts and the like can be prevented from entering inside.

## Claims

1. A disc cartridge **characterized by** comprising:
a cartridge main body composed of a lower shell to which a first opening for a recording and/or replaying apparatus is formed and an upper shell abutted against the lower shell;
a rotation wheel rotatably accommodated in the cartridge main body as well as accommodating a disc therein and having a second opening formed thereto in correspondence to the first opening to locate the accommodated disc outside; and
a shutter mechanism located between the lower shell and the rotation and opening the first opening and the second opening when the first opening agrees with the second opening in association with the rotation of the rotation wheel,
wherein the shutter mechanism includes a first shutter plate rotatably attached to one of the shells and a second shutter plate rotatably attached to the first shutter plate;
one of the shutter plates is rotatably attached to the other shutter plate by inserting a support shaft disposed to the one shutter plate into a shaft hole formed to the other shutter plate; and
locking portions having a diameter larger than the shaft hole is disposed to the extreme end of the support shaft.

2. A disc cartridge according to claim 1, **characterized in that** the support shaft is composed of a pair of elastic pieces, and the locking portion disposed to the extreme end portion of the pair of elastic pieces is formed to expand its diameter from the extreme end toward a base end and has a guide portion formed on the outer surface thereof and used when the support shaft is inserted into the shaft hole.

3. A disc cartridge according to claim 1, **characterized in that** the locking portion is formed by melting the extreme end portion of the support shaft by an ultrasonic wave or heat.

4. A disc cartridge according to claim 1, **characterized in that** the rotation wheel has a control projection engaged with a cam groove formed to the second shutter plate which is rotated with respect to the first shutter plate in association with the rotation of the rotation wheel; and
a further locking portion, which is wider than the width of the cam groove, is disposed to the extreme end of the control projection.

5. A disc cartridge according to claim 4, **characterized in that** the control projection is composed of a pair of elastic pieces, and the further locking portion disposed to the extreme end portion of the pair of elastic pieces is formed to expand its diameter from the extreme end toward a base end and has a guide portion formed on the outer surface thereof and used when the support shaft is inserted into the shaft hole.

6. A disc cartridge according to claim 4, **characterized in that** the locking portion of the control projection is formed by melting the extreme end portion of the control projection by an ultrasonic wave or heat.

7. A disc cartridge according to claim 1, **characterized in that** the support shaft is disposed to a reinforcing portion integrally formed with the shutter plate to which the support shaft is disposed, and an escape groove for the reinforcing portion is disposed to the rotation wheel.

8. A disc cartridge **characterized by** comprising:
a cartridge main body composed of a lower shell to which a first opening for a recording and/or replaying apparatus is formed and an upper shell abutted against the lower shell;
a rotation wheel rotatably accommodated in the cartridge main body as well as accommodating a disc therein and having a second opening formed thereto in correspondence to the first opening to locate the accommodated disc outside;
a shutter mechanism located between the lower shell and the rotation wheel, having a first shutter plate rotatably attached to one of the shells and a second shutter plate rotatably attached to the first shutter plate, and opening the first and second openings when the first opening agrees with the second opening in association with the rotation of the rotation wheel; and
an urging member for rotating and urging the rotation wheel in a direction where the shutter mechanism opens the first and second openings,
wherein the first shutter plate is prevented from being removed from the rotation wheel by a first removal prevention mechanism; and
the second shutter plate is prevented from being removed from the first shutter plate by a second removal prevention mechanism as well as prevented from being removed from the rotation wheel by a third removal prevention mechanism.

9. A disc cartridge according to claim 8, **characterized in that** one end of the urging member is locked to a locking portion of the rotation wheel and the other end thereof is locked to the first shutter plate attached to the one of the shells or to a locking portion the one of the shells.

10. A disc cartridge according to claim 9, **characterized in that** the one end of the urging member is locked to a locking portion of a rotation support portion of the first shutter plate.

11. A disc cartridge according to claim 8, **characterized in that**:
the first removal prevention mechanism includes a removal prevention groove with which a removal prevention projection formed to the first shutter plate and the removal prevention projection formed to the rotation wheel are engaged; and
the removal prevention projections are engaged with the removal prevention groove at least when the first and second shutter plates open the first and second openings.

12. A disc cartridge according to claim 11, **characterized in that** the removal prevention projections are not in contact with the removal prevention groove in the width direction thereof.

13. A disc cartridge according to claim 11, **characterized in that** the rotation wheel has a stopper piece of the urging member formed in the vicinity of the removal prevention groove.

14. A disc cartridge according to claim 11, **characterized in** a lifter is formed to the lower shell to lift the first shutter plate in a direction of the rotation wheel when the first shutter plate rotates in a direction where the first and second openings are closed.

15. A disc cartridge according to claim 8, **characterized in that** the second removal prevention mechanism is a removal prevention mechanism for one of the first and second shutter plates the support shaft formed to which is inserted into the shaft hole of the other shutter plates.

16. A disc cartridge according to claim 8, **characterized in that**:the rotation wheel has a control projection engaged with a cam portion formed to the second shutter plate which is rotated with respect to the first shutter plate in association with the rotation of the rotation wheel; and
the third removal prevention mechanism is composed of an escape preventing portion formed by making the extreme end portion of the control projection wider than the width of the cam groove.
